# EUROPÄISCHE PATENTSCHRIFT

(11) **EP 1 602 685 B1**
(45) Veröffentlichungstag und Bekanntmachung des Hinweises auf die Patenterteilung: **02.02.2011**
(21) Anmeldenummer: 05011163.2
(22) Anmeldetag: 24.05.2005
(51) Int. Cl.: C08K 5/00, C08K 5/5313, C08K 5/53, C08K 5/5377

(54) **Pressgranulierte Flammschutzmittelzusammensetzung**
Pressing granulated fire retardant composition
Composition ignifuge en granules

(30) Priorität: 02.06.2004 DE 102004026799
(43) Veröffentlichungstag der Anmeldung: 07.12.2005
(73) Patentinhaber: Clariant Produkte (Deutschland) GmbH, 65929 Frankfurt am Main (DE)
(72) Erfinder: Bauer, Harald, Dr., 50170 Kerpen (DE); Hörold, Sebastian, Dr., 86420 Diedorf (DE); Nass, Bernd, Dr., 86152 Augsburg (DE); Sicken, Martin, Dr., 51149 Köln (DE)

(56) Entgegenhaltungen:
- US-A1- 2004 021 135
- US-A1- 2004 049 063
- US-B1- 6 503 969
- US-B1- 6 547 992

## Beschreibung

Die vorliegende Erfindung betrifft eine pressgranulierte Flammschutzmittelzusammensetzung sowie ein Verfahren zur Herstellung dieser pressgranulierten Flammschutzmittelzusammensetzung und deren Verwendung.

Phosphororganische Verbindungen finden Anwendung als Flammschutzmittel für Kunststoffe wie z. B. Polyamide oder Polyester. Bei ihrer Herstellung, etwa nach EP-A-1 047 700 oder DE-A-199 10 232 fallen diese phosphororganischen Flammschutzmittel in Pulverform an. Die Pulverform ist in vielen Fällen nachteilig, da sie die Neigung zur Staubbildung ebenso verstärkt wie die Neigung zu Staubexplosionen und die Einarbeitung in Polymerformulierungen erschwert wegen zu niedriger Schüttdichte und ggf dadurch, dass der pulverförmige Feststoff durch das Polymer schlecht benetzt wird.

Die EP-A-1 396 523 beschreibt eine kompaktierte Flammschutzmittelzusammensetzung. Dabei wird eine pulverförmige Flammschutzmittelzusammensetzung bevorzugt rollkompaktiert. Die pulverförmige Flammschutzmittelzusammensetzung besteht aus einer phosphororganischen Flammschutzkomponente und einem Kompaktierhilfsmittel. Kompaktierungshilfsmittel sind bevorzugt aus den Gruppen Alkylethoxylate, Glycole, Caprolactam, Triphenylphosphat, Wachse und Kunstharze.

Pulverförmige (nicht pressgranulierte) Flammschutzmittelzusammensetzungen haben den Nachteil einer geringen Teilchengröße und/oder Schüttdichte.

Eine Teilchengröße unterhalb des bevorzugten Bereiches erschwert die Einarbeitung wegen erhöhten Staubanteils und Explosionsgefahr.

Eine Teilchengröße nach dem Stand der Technik oberhalb des erfindungsgemäß bevorzugten Bereiches erschwert die gleichmäßige Verteilung des phosphororganischen Flammschutzmittels. Dies äußert sich in schlechten mechanischen Festigkeitswerten (z.B. E-Modul, Zugfestigkeit) als auch in unzureichendem Flammschutz.

Die Aufgabe einer pressgranulierten Flammschutzmittelzusammensetzung mit niedrigem Staubanteil allein kann nach dem Stand der Technik erzielt werden. Jedoch ist am Stand der Technik nachteilig, dass die vorgeschlagenen Kompaktierhilfsmittel selbst entweder keine Flammschutzwirkung aufweisen oder wegen eines vergleichsweise niedrigen Phosphorgehaltes nur einen geringen Beitrag dazu leisten.

Es bestand somit die Aufgabe, eine pressgranulierte Flammschutzmittelzusammensetzung mit erhöhtem Phosphorgehalt bereitzustellen. Diese Aufgabe wird gelöst, indem ein pulverförmiges (Di)Phosphinsäuresalz der Formel (I) und/oder (II) und/oder deren Polymere und ein schmelzbares Zinkphosphinat pressgranuliert werden, wobei ggf. ein Synergist zugesetzt wird.

Die Erfindung betrifft daher eine pressgranulierte Flammschutzmittelzusammensetzung, welche dadurch gekennzeichnet ist, dass sie ein Phosphinsäuresalz der Formel (I) und/oder ein Diphosphinsäuresalz der Formel (II) und/oder deren Polymere, 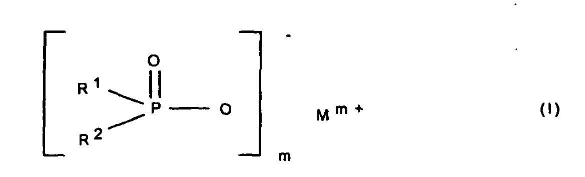 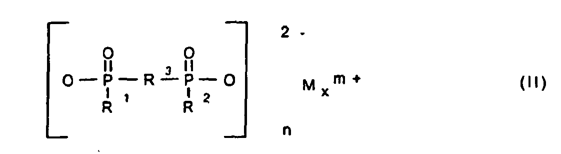 worin
- R¹, R²: gleich oder verschieden sind und C₁-C₆-Alkyl, linear oder verzweigt und/oder Aryl;
- R³: C₁-C₁₀-Alkylen, linear oder verzweigt, C₆-C₁₀-Arylen, -Alkylarylen oder -Arylalkylen;
- M: Mg, Ca, Al, Sb, Sn, Ge, Ti, Fe, Zr, Ce, Bi, Sr, Mn, Li, Na, K und/oder eine Stickstoffbase in der protonierten Form;
- m: 1 bis 4;
- n: 1 bis 4;
- x: 1 bis 4
bedeuten, und ein schmelzbares Zinkphosphinat enthält, wobei die schmelzbaren Zinkphosphinate der Formel (I) und/oder deren Polymeren, 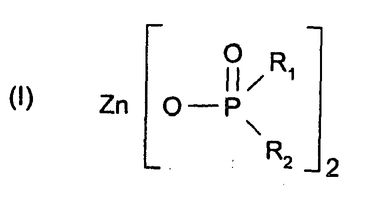 worin
R¹, R² gleich oder verschieden sind und Wasserstoff, C₁-C₁₈-Alkyl, linear oder verzweigt und/oder Aryl bedeuten, sowie einen Schmelzpunkt zwischen 40 und 250°C aufweisen, entsprechen und das schmelzbare Zinkphosphinat einen Phosphorgehalt von 10 - 35 Gew.-% aufweist sowie die pressgranulierte Flammschutzmittelzusammensetzung und/oder
a) 50 bis 98 Gew.-% (Di)Phosphinsäuresalz der Formel (I) und/oder (II) und/oder deren Polymere und
b) 2 bis 50 Gew.-% schmelzbares Zinkphosphinat enthält.
.

Überraschenderweise wurde gefunden, dass mit der erfindungsgemäßen pressgranulierten Flammschutzmittelzusammensetzung hergestellte flammgeschützte Polymerformkörper eine verbesserte Flammschutzwirkung aufweisen. Überraschend wurde außerdem gefunden, dass diese erfindungsgemäßen flammgeschützten Polymerformkörper verbesserte mechanische Festigkeitswerte (z.B. E-Modul und Zugfestigkeit) aufweisen.

Bevorzugt bedeutet M Calcium, Aluminium oder Titan.

Unter Stickstoffbasen in der protonierten Form werden bevorzugt die protonierten Formen von Ammoniak, Melamin, Triethanolamin, insbesondere NH₄⁺, verstanden.

Unter Stickstoffbasen in der protonierten Form werden bevorzugt die protonierten Formen von Acetoguanamin, Acetylenharnstoff, 1-Adamantanamin, Alkylguanidin, Allantoin, 2-Amino-4-methylpyrimidin, Ammelide, Ammeline, Anilin, Benzoguanamin, Benzotriazol, Benzylharnstoff, Biguanid, Biuret, Butyroguanamine, Caprinoguanamine, Dicyandiamid, Dimethylharnstoff, Diphenylguanidin, N,N'-Diphenylharnstoff, 5,5-Diphenylhydantoin, Dodecylguanidine, N-(2-aminoethyl)-1,2-ethanediamin, Ethylen-bis-5-triazon, Ethylenedimelamin, N-Ethylpiperidin, Glycinanhydrid, Glycouril, Guanidin, Harnstoff, Hydantoin, Malonsäureamidamidin, Melamin, 2-Phenylbenzimidazol, 1-Phenylbiguanid, Phenylguanidin, Tetramethoxymethylbenzoguanamine, Tetramethylguanidin, Tetramethylharnstoff, Tolyltriazol, Triethanolamin und/oder Kondensationsprodukte des Melamins z.B. Melem, Melam oder Melon bzw. höher kondensierte Verbindungen dieses Typs.

Bevorzugt sind R¹, R² gleich oder verschieden und bedeuten C₁-C₆-Alkyl, linear oder verzweigt und/oder Phenyl.
Besonders bevorzugt sind R¹, R² gleich oder verschieden und bedeuten Methyl, Ethyl, n-Propyl, iso-Propyl, n-Butyl, tert.-Butyl, n-Pentyl und/oder Phenyl.

Bevorzugt bedeutet R³ Methylen, Ethylen, n-Propylen, iso-Propylen, n-Butylen, tert.-Butylen, n-Pentylen, n-Octylen oder n-Dodecylen.

Bevorzugt bedeutet R³ auch Phenylen oder Naphthylen.

Bevorzugt bedeutet R³ auch Methyl-phenylen, Ethyl-phenylen, tert.-Butylphenylen, Methyl-naphthylen, Ethyl-naphthylen oder tert.-Butylnaphthylen.

Bevorzugt bedeutet R³ auch Phenyl-methylen, Phenyl-ethylen, Phenyl-propylen oder Phenyl-butylen.

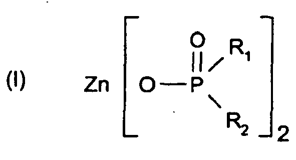

Die schmelzbaren Zinkphosphinate entsprechen der Formel (I) und/oder deren Polymeren, worin R¹, R² gleich oder verschieden sind und Wasserstoff, C₁-C₁₈-Alkyl, linear oder verzweigt und/oder Aryl bedeuten, und die einen Schmelzpunkt zwischen 40 und 250°C aufweisen.

Bevorzugt sind R¹, R² gleich oder verschieden und bedeuten C₁-C₆-Alkyl, linear oder verzweigt und/oder Phenyl.

Besonders bevorzugt sind R¹, R² gleich oder verschieden und bedeuten Methyl, Ethyl, n-Propyl, iso-Propyl, n-Butyl, tert.-Butyl, n-Pentyl und/oder Phenyl.

Besonders bevorzugt handelt es sich bei dem Zinkphosphinat um Dimethylphosphinsäure-Zinksalz, Methylethylphosphinsäure-Zinksalz, Diphenylphosphinsäure-Zinksalz oder Diethylphosphinsäure-Zinksalz. Geeignet sind auch Ethylbutylphosphinsäure-Zinksalz und Dibutylphosphinsäure-Zinksalz.

Die schmelzbaren Zinkphosphinate weisen einen Phosphorgehalt von 10 bis 35 Gew.-%, besonders bevorzugt von 15 bis 25 Gew.-% auf.
Das erfindungsgemäß besonders gut einsetzbare schmelzbare Zinkdiethylphosphinat weist bereits von sich aus eine Flammschutzwirkung auf. Außerdem besitzt es mit ca. 20 Gew.-% einen doppelt so hohen Phosphorgehalt auf wie z.B. das im Stand der Technik genannte Triphenylphosphat (9,5 %).

Bevorzugt kann die pressgranulierte Flammschutzmittelzusammensetzung neben dem erfindungsgemäßen pulverförmigen (Di)Phosphinsäuresalz der Formel (I) und/oder (II) und/oder deren Polymere und dem schmelzbaren Zinkphosphinat außerdem noch mindestens einen Synergisten enthalten.

Erfindungsgemäß werden als Synergisten Melaminphosphat (z.B. ®Melapur MP der Fa. Ciba-DSM Melapur), Dimelaminphosphat, Pentamelamintriphosphat, Trimelamindiphosphat, Tetrakismelamintriphosphat, Hexakismelaminpentaphosphat, Melamindiphosphat, Melamintetraphosphat, Melaminpyrophosphat (z.B. ®Budit 311 der Fa. Budenheim, ®MPP-B der Fa. Sanwa Chemicals), Melaminpolyphosphate, Melampolyphosphate, Melempolyphosphate und/oder Melonpolyphosphate bevorzugt. Besonders bevorzugt sind Melaminpolyphosphate wie ®Melapur 200/70 der Fa. Ciba-DSM Melapur, ®Budit 3141, 3141 CA und 3141 CB und Melaminpolyphosphat/ Melaminpyrophosphat der Typen 13-1100, 13-1105, 13-1115, MPP02-244 der Fa. Hummel-Croton und PMP-200 der Fa. Nissan.

Weiterhin sind Melaminkondensationsprodukte wie Melam, Melem und/oder Melon bevorzugte Synergisten.

In einer weiteren Ausführungsform sind Kondensationsprodukte des Melamins oder Umsetzungsprodukte des Melamins mit Phosphorsäure bzw. Umsetzungsprodukte von Kondensationsprodukten des Melamins mit Phosphorsäure sowie Gemische der genannten Produkte bevorzugte Synergisten. Kondensationsprodukte des Melamins sind z.B. Melem, Melam oder Melon bzw. höher kondensierte Verbindungen dieses Typs sowie Gemische derselben und können z.B. durch ein Verfahren hergestellt werden, wie es in der WO-A-96/16948 beschrieben ist.
Unter den Umsetzungsprodukten mit Phosphorsäure versteht man Verbindungen, die durch Umsetzung von Melamin oder den kondensierten Melaminverbindungen wie Melam, Melem oder Melon etc. mit Phosphorsäure entstehen. Beispiele hierfür sind Melaminpolyphosphat, Melampolyphosphat und Melempolyphosphat bzw. gemischte Polysalze, wie sie z. B. in der WO-A-98/39306 beschrieben sind. Die genannten Verbindungen sind bereits aus der Literatur bekannt und können auch durch andere Verfahren als die direkte Umsetzung mit Phosphorsäure hergestellt werden. Melaminpolyphosphat kann zum Beispiel analog WO-A-98/45364 hergestellt werden durch die Umsetzung von Polyphosphorsäure und Melamin bzw. analog WO-A-98/08898 durch die Kondensation von Melaminphosphat bzw.
Melaminpyrophosphat.

Erfindungsgemäß sind als Synergisten weiterhin bevorzugt oligomere Ester des Tris(hydroxyethyl)isocyanurats mit aromatischen Polycarbonsäuren, Tris(hydroxyethyl)isocyanurat, Melamincyanurat (z.B. ®Melapur MC oder ®Melapur MC XL der Fa. Ciba-DSM Melapur), und/oder Stickstoffbasen in ihrer nicht protonierten Formen.

Erfindungsgemäß sind als Synergisten weiterhin bevorzugt stickstoffhaltige Phosphate der Formeln (NH₄)_{y}H_{3-y}PO₄ bzw. (NH₄PO₃)_{z}, mit y gleich 1 bis 3 und z gleich 1 bis 10.000

Bevorzugt handelt es sich bei den Stickstoffverbindungen um solche der Formeln (III) bis (VIII) oder Gemische davon 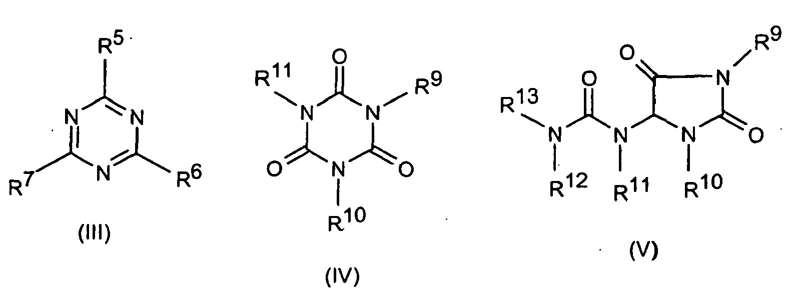 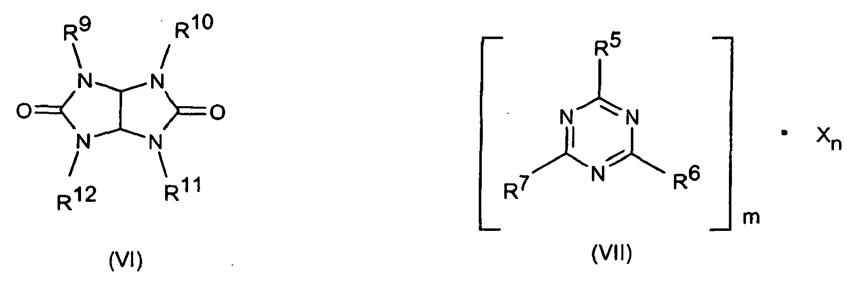 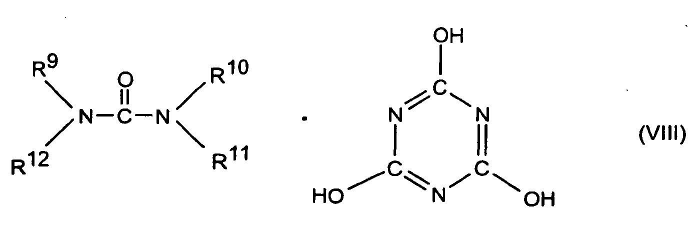 worin
- R⁵ bis R⁷: Wasserstoff, C₁-C₈-Alkyl, C₅-C₁₆-Cycloalkyl oder -Alkylcycloalkyl, möglicherweise substituiert mit einer Hydroxy- oder einer C₁-C₄-Hydroxyalkyl-Funktion, C₂-C₈-Alkenyl, C₁-C₈-Alkoxy, -Acyl, -Acyloxy, C₆-C₁₂-Aryl oder -Arylalkyl, -OR⁸ und -N(R⁸)R⁹ , sowie N-alicyclisch oder N-aromatisch,
- R⁸: Wasserstoff, C₁-C₈-Alkyl, C₅-C₁₆-Cycloalkyl oder -Alkylcycloalkyl, möglicherweise substituiert mit einer Hydroxy- oder einer C₁-C₄-Hydroxyalkyl-Funktion, C₂-C₈-Alkenyl, C₁-C₈-Alkoxy, -Acyl, -Acyloxy oder C₆-C₁₂-Aryl oder -Arylalkyl,
- R⁹ bis R¹³: die gleichen Gruppen wie R⁸ sowie -O-R⁸,
- m und n: unabhängig voneinander 1, 2, 3 oder 4,
- X: Säuren, die Addukte mit Triazinverbindungen (III) bilden können,
bedeuten.

Erfindungsgemäß sind auch synergistische Kombinationen von den genannten Phosphinaten mit bestimmten stickstoffhaltigen Verbindungen, die in einer ganzen Reihe von Polymeren als Flammschutzmittel effektiver wirken, als die Phosphinate allein (DE-A-19614 424 A1 sowie DE-A-197 34 437 A1 und DE-A-197 37 727 A1).

Bevorzugt entstammt der Synergist auch der Gruppe der Carbodiimide (z.B. ®Stabaxol P der Fa. BASF), Polyisocyanate (z.B. ®Basonat HI 100 oder ®Vestanat T 1890/100), Carbonylbiscaprolactam (Fa Allinco) oder Styrol-Acryl-Polymere (®Joncryl ADR-4357 der Fa. Johnson).

Bevorzugt sind auch Synergisten aus der Gruppe der sterisch gehinderten Phenole (z.B. Hostanox OSP 1), sterisch gehinderten Amine Lichtstabilisatoren (z.B. Chimasorb 944, Hostavin-Typen), Phosphonite Antioxidantien (z.B. Sandostab® P-EPQ der Fa. Clariant) und Trennmittel (Licomont-Typen der Fa. Clariant).

Bevorzugt handelt es sich bei den Synergisten um Zinkverbindungen z.B. Zinkoxid (z.B. Zinkoxid aktiv), Zinkhydroxid, Zinkoxidhydrat, wasserfreies Zinkcarbonat, basisches Zinkcarbonat, Zinkhydroxidcarbonat, basisches Zinkcarbonathydrat, (basisches) Zinksilicat, Zinkhexafluorosilicat, Zinkstannat, Zink-Magnesium-Aluminium-Hydroxid-Carbonat, Zinkhexafluorosilicathexahydrat, Zinksalze der Oxosäuren der dritten Hauptgruppe wie Zinkborat (z.B. ®Firebrake ZB, 415 oder 500 der Fa. Borax oder ®Storflam ZBA der Fa. Storey), Zinksalze der Oxosäuren der vierten Hauptgruppe (z.B. Zinkstannat, -hydroxystannat), Zinksalze der Oxosäuren der fünften Hauptgruppe wie Zinkphosphat, Zinkpyrophosphat, Zinksalze der Oxosäuren der Übergangsmetalle, wie Zinkchromat(VI)hydroxyd (Zinkgelb), Zinkchromit, Zinkmolybdat (z.B. ®Kemgard 911 B, ®Kemgard 911C der Fa. Sherwin-Williams Company), Zinkpermanganat, Zinkmolybdat-Magnesiumsilicat oder Zinkpermanganat oder Zinksulfide.

Bevorzugt handelt es sich bei den Synergisten auch um solche mit organischen Anionen, wie Zinksalze von Mono-, Di-, Oligo-, Polycarbonsäuren (Salze der Ameisensäure (Zinkformiate), der Essigsäure (Zinkacetate, Zinkacetat dihydrat, Galzin), der Trifluoressigsäure (Zinktrifluoracetat hydrat), Zinkpropionat, Zinkbutyrat, Zinkvalerat, Zinkcaprylat, Zinkoleat, Zinkstearat, der Oxalsäure (Zinkoxalat), der Weinsäure (Zinktartrat), Citronensäure (tribasisches Zinkcitrat dihydrat), Benzoesäure (Benzoat), Zinksalicylat, Milchsäure (Zinklactat, Zinklactat trihydrat), Acrylsäure, Maleinsäure, Bernsteinsäure, von Aminosäuren (Glyzin), von sauren Hydroxofunktionen (Zinkphenolate), Zink-para-Phenolsulfonat, Zink-para-Phenolsulfonat hydrat, Zinkacetylacetonat hydrat, Zinktannat, Zinkdimethyldithiocarbamat oder Zinktrifluormethansulfonat.

Weiterhin bevorzugte Synergisten sind Magnesiumverbindungen z.B. Magnesiumhydroxid, Hydrotalcite, Magnesium-Carbonate oder Magnesium-Calcium-Carbonate.

Weiterhin bevorzugte Synergisten sind Aluminiumverbindungen z.B. Aluminiumhydroxid oder -phosphat.

Weiterhin bevorzugte Synergisten sind Carbodiimide, N,N'-Dicyclohexylcarbodiimid, Polyisocyanate, Carbonylbis-caprolactam, Styrol-Acryl-Polymere, sterisch gehinderten Phenole, sterisch gehinderten Amine und Lichtstabilisatoren, Phosphonite, Antioxidantien und/oder Trennmittel.

Bevorzugt weist die erfindungsgemäße pressgranulierte Flammschutzmittelzusammensetzung eine mittlere Teilchengröße von 100 bis 2.000 µm, besonders bevorzugt von 200 bis 1.000 µm auf.

Eine Teilchengröße oberhalb des bevorzugten Bereiches erschwert die gleichmäßige Verteilung des erfindungsgemäßen pressgranulierten Flammschutzmittelzusammensetzung, eine Teilchengröße unterhalb des bevorzugten Bereiches erschwert die Einarbeitung wegen verstärkter Staubbildung und Explosionsgefahr.

Besitzt eine Flammschutzmittelzusammensetzung eine Schüttdichte unterhalb des erfindungsgemäß bevorzugten Bereiches, so muss bei der Herstellung von flammgeschützten Polymerformmassen durch Extrusion die in dem Pulver-Schüttgut enthaltene Luft laufend entfernt werden. Dies muss durch entsprechend langsames Einmischen erzielt werden. Entsprechend geringe Polymerformmassen-Ausstoß-Mengen sind die Folge. Der Ausstoß kann durch erfindungsgemäße pressgranulierte Flammschutzmittelzusammensetzungen gesteigert werden.

Die mittlere Teilchengröße des erfindungsgemäß als Ausgangsmaterial eingesetzte pulverförmige (Di)Phosphinsäuresalz der Formel (I) und/oder (II) und/oder deren Polymere beträgt 0,1 bis 1000 µm, bevorzugt 1 bis 100 µm.

Die bevorzugte Schüttdichte des erfindungsgemäß als Ausgangsmaterial eingesetzte pulverförmigen (Di)Phosphinsäuresalz der Formel (I) und/oder (II) und/oder deren Polymere beträgt 80 bis 800 g/l, besonders bevorzugt 200 bis 700 g/l.

Die mittlere Teilchengröße der erfindungsgemäßen pressgranulierten Flammschutzmittelzusammensetzung beträgt 100 bis 2000 µm, bevorzugt 200 bis 1000 µm.

Die Schüttdichte der erfindungsgemäßen pressgranulierten Flammschutzmittelzusammensetzung beträgt 200 bis 1500 g/l, bevorzugt 300 bis 1000 g/l.

Bevorzugte erfindungsgemäße pressgranulierte Flammschutzmittelzusammensetzungen besitzen einen Staubanteil (Anteil mit Teilchengrößen unter 20µm) von 0,1 bis 10 Gew.-%, bevorzugt 0,5 bis 5 Gew.-%.

Die bevorzugte Restfeuchte der erfindungsgemäßen pressgranulierten Flammschutzmittelzusammensetzung beträgt 0,01 bis 10 Gew.-%, besonders bevorzugt 0,1 bis 1 %.

Restfeuchten oberhalb der erfindungsgemäß bevorzugten Bereiche bewirken einen verstärkten Polymerabbau.

Die erfindungsgemäßen pulverförmigen (Di)Phosphinsäuresalze der Formel (I) und/oder (II) und/oder deren Polymere haben in Wasser und/oder den üblichen organischen Lösungsmitteln eine bevorzugte Löslichkeit zwischen 0,001 und 10 Gew.-%.

Die erfindungsgemäßen pulverförmigen (Di)Phosphinsäuresalze der Formel (I) und/oder (II) und/oder deren Polymere haben bevorzugte L-Farbwerte von 85 bis 99,9, besonders bevorzugt 90 bis 98. Pulverförmiges (Di)Phosphinsäuresalz der Formel (I) und/oder (II) und/oder deren Polymere mit L-Werten unterhalb des erfindungsgemäßen Bereiches erfordern einen höheren Weißpigmenteinsatz. Dieser verschlechtert die mechanischen Stabilitätseigenschaften des Polymerformkörpers (z.B. E-Modul).

Die erfindungsgemäßen pulverförmigen (Di)Phosphinsäuresalze der Formel (I) und/oder (II) und/oder deren Polymere haben bevorzugte a-Farbwerte von -4 bis +9, besonders bevorzugt -2 bis +6.

Die erfindungsgemäßen pulverförmigen (Di)Phosphinsäuresalze der Formel (I) und/oder (II) und/oder deren Polymere haben bevorzugte b-Farbwerte von -2 bis +6, besonders bevorzugt -1 bis +3.

Die Farbwerte werden im System nach Hunter (CIE-LAB-System, Commission Internationale d'Eclairage) angegeben. L-Werte gehen von 0 (schwarz) bis 100 (weiß), a-Werte von -a (grün) bis +a (rot) und b-Werte von -b (blau) bis +b (gelb).

Pulverförmige (Di)Phosphinsäuresalze der Formel (I) und/oder (II) und/oder deren Polymere mit a- bzw. b-Werten außerhalb des erfindungsgemäßen Bereiches erfordern einen höheren Weißpigmenteinsatz. Dieser verschlechtert die mechanischen Stabilitätseigenschaften des Polymerformkörpers (z.B. E-Modul).

Die erfindungsgemäße pressgranulierte Flammschutzmittelzusammensetzungenthält:
a) 50 bis 98 Gew.-% Phosphinsäuresalz der Formel (I) und/oder ein Diphosphinsäuresalz der Formel (II) und/oder deren Polymere
b) 2 bis 50 % eines schmelzbaren Zinkphosphinates Besonders bevorzugt enthält die erfindungsgemäße pressgranulierte Flammschutzmittelzusammensetzung:
   a) 95 bis 60 Gew.-% Phosphinsäuresalz der Formel (I) und/oder ein Diphosphinsäuresalz der Formel (II) und/oder deren Polymere
   b) 5 bis 40 % eines schmelzbaren Zinkphosphinates.

Besonders bevorzugt enthält die erfindungsgemäße pressgranulierte Flammschutzmittelzusammensetzung:
a) 8 bis 90 Gew.-% Phosphinsäuresalz der Formel (I) und/oder ein Diphosphinsäuresalz der Formel (II) und/oder deren Polymere
b) 2 bis 50 % eines schmelzbaren Zinkphosphinates
c) 8 bis 90 Gew.-% mindestens eines Synergisten.

Besonders bevorzugt enthält die erfindungsgemäße pressgranulierte Flammschutzmittelzusammensetzung:
a) 10 bis 85 Gew.-% Phosphinsäuresalz der Formel (I) und/oder ein Diphosphinsäuresalz der Formel (II) und/oder deren Polymere
b) 5 bis 40 % eines schmelzbaren Zinkphosphinates
c) 10 bis 85 Gew.-% mindestens eines Synergisten.

Pressgranulierte Flammschutzmittelzusammensetzungen mit Phosphorgehalten unterhalb des erfindungsgemäßen Bereiches können in der Anwendung in flammgeschützten Polymerformmassen und/oder anderen Polymeren nicht die gewünschte UL-94 Klassifizierung erreichen.

Die Erfindung betrifft auch ein Verfahren zur Herstellung von pressgranulierten Flammschutzmittelzusammensetzungen, dadurch gekennzeichnet, dass man das pulverförmige (Di)Phosphinsäuresalz der Formel (I) und/oder (II) und/oder deren Polymere zusammen mit dem schmelzbaren Zinkphosphinat und ggf. weiteren Stoffen, insbesondere Synergisten, 0,01 bis 1 Stunden bei 50 bis 300°C mischt und dann zum Pressgranulat kompaktiert.

Anders ausgedrückt, wird das pulverförmige (Di)Phosphinsäuresalz der Formel (I) und/oder (II) und/oder deren Polymere mit dem schmelzbarem Zinkphosphinat verdichtet, wobei Pressdrücke von 0,1 kN/cm² bis 100 kN/cm², bevorzugt 1 kN/cm² bis 60 kN/cm². eingesetzt werden.

Bevorzugt werden das pulverförmige (Di)Phosphinsäuresalz der Formel (I) und/oder (II) und/oder deren Polymere und / oder der Synergist mit dem schmelzbaren Zinkphosphinat gemischt und pressgranuliert.

Die erfindungsgemäße pressgranulierte Flammschutzmittelzusammensetzung kann in einer Ausführungsform hergestellt werden, indem das schmelzbare Zinkphosphinat in fester oder flüssiger Form in einem geeigneten Mischer zu dem bewegten phosphororganischen Flammschutzmittel oder zu einer bewegten Mischung von Phosphororganischem Flammschutzmittel und Synergist gegeben und 0,01 bis 1 Stunden bei 50 bis 300°C gemischt wird.

### Geeignete Mischer können sein:

Pflugscharmischertypen der Firmen Lödige (Typen ®M5 oder ®M20), Telschig Verfahrenstechnik GmbH, oder Minox (Typen ®PSM 10 bis 10000), Ringspalt- und Ringschichtmischer der Firmen Lödige, (z.B. Typ ®CB30, ®CB Konti-Mischer), Niro (Typ ®HEC), Drais/Mannheim (z.B. Typ ®K-TTE4), Intensivmischer der Fa. Eirich (z.B. Typ ®R02, ®R 12, ®DE 18, ®Evactherm), Doppelwellen-Paddelmischer Fa. Eirich, Freifallmischer der Firmen Telschig Verfahrenstechnik GmbH (Typ ®WPA6) oder Hauf, Zig-Zag-Mischer der Fa. Niro, Kegelschneckenmischer der Fa. Nauta, in denen das Mischgut nach dem Archimedes-Prinzip durch eine Schnecke umwälzt wird, Planeten-Mischmaschinen der Fa. Hobart, Doppelkonusmischer der Fa. TELSCHIG Verfahrenstechnik GmbH, Fliessbettmischer der Fa. Telschig Verfahrenstechnik GmbH, Luftstrahlmischer der Fa. Telschig Verfahrenstechnik GmbH, Sprühmischer der Fa. Telschig Verfahrenstechnik GmbH, Taumel- bzw Container-Mischer z.B. der Fa. Thyssen Henschel Industrietechnik GmbH, Fluidmischer der Fa. Thyssen Henschel Industrietechnik GmbH, Kühlmischer der Firmen Papenmeier oder Thyssen Henschel Industrietechnik GmbH, Flexomix-Mischertypen der Fa. Schugi.

Bevorzugt handelt es sich bei der Pressgranulierung um eine Rollkompaktierung.

Bevorzugt werden phosphororganisches Flammschutzmittel und/oder Synergisten und schmelzbares Zinkphosphinat gemischt, rollkompaktiert, gebrochen und klassiert.

Bevorzugt werden phosphororganisches Flammschutzmittel und/oder Synergisten und schmelzbares Zinkphosphinat gemischt, rollkompaktiert, gebrochen, klassiert und danach gecoated oder getrocknet bzw. danach getrocknet und gecoated.

Bei der Rollkompaktierung wird das pulverförmige Ausgangsmaterial zwischen zwei Rollen dosiert, die das Material einziehen und verdichten bzw. kompaktieren. Dabei werden die Feststoffpartikel durch äußere Druckeinwirkung gegeneinander verhackt. Das primäre Kompaktat ist eine Platte, beziehungsweise ein Formkörper. Wenn die Walzen strukturiert sind besteht es z.B. aus zigarrenförmigen Schülpen.

Da bei der Rollkompaktierung die Auflagefläche der Rollen, und damit der wirksame Druck nicht besonders gut definiert ist, gibt man hier die Linienpresskraft an. Das ist die Kraft, die pro cm Länge der Kompaktierrollen wirkt. Bei der Rollkompaktierung wird bevorzugt eine Linienpresskraft von 1 bis 50 kN/cm eingesetzt. Besonders bevorzugt wird bei der Rollkompaktierung eine Linienpresskraft von 2 bis 30 kN/cm eingesetzt. Die Rollkompaktierung erfolgt bevorzugt bei 10 bis 300°C.

Bevorzugte Apparate für die Rollkompaktierung sind Kompaktoren der Firmen Hosokawa-Bepex GmbH (®Pharmapaktor), Alexanderwerk (®WP 120 x 40 V, ®WP 170 x 120 V, ®WP 200 x 75 VN, ®WP 300 x 100 V) und Walzenpressen der Firma Köppern.

Bevorzugt kann bei der Rollkompaktierung auf weitere Kompaktierungshilfsmittel ohne eigene Flammschutzwirkung verzichtet werden.

Bevorzugt können bei der Rollkompaktierung auch untergeordnete Mengen (0,1 bis zu 10 %) weitere Kompaktierungshilfsmittel ohne eigene Flammschutzwirkung eingesetzt werden.

Bevorzugt handelt es sich bei den erfindungsgemäß einsetzbaren weiteren Kompaktierhilfsmitteln um Alkylalkoxylate mit 8 bis 22 C-Atomen und 1 bis 80 EO-Einheiten pro Mol Alkohol. Unter den Alkylalkoxylaten werden bevorzugt ethoxylierte Alkohole, bevorzugt primäre Alkohole, mit bevorzugt 8 bis 22 C-Atomen und bevorzugt 1 bis 80 EO-Einheiten pro Mol Alkohol, eingesetzt, wobei der Alkoholrest linear oder bevorzugt in 2-Stellung methylverzweigt ist oder lineare und methylverzweigte Reste im Gemisch enthält, so wie dies üblicherweise in Oxoalkoholresten der Fall ist. Zu den bevorzugten ethoxylierten Alkoholen gehören beispielsweise C11-Alkohole mit 3, 5, 7, 8 und 11 EO-Einheiten, (C₁₂-C₁₅)-Alkohole mit 3, 6, 7, 8, 10 und 13 EO-Einheiten, (C₁₄-C₁₅)-Alkohole mit 4, 7 und 8 EO-Einheiten, (C₁₆-C₁₈)-Alkohole mit 8, 11, 15, 20, 25, 50 und 80 EO-Einheiten und Mischungen derselben, wie z.B. die ®Genapol-Typen T80, T110, T150, T200, T250, T500, T800 der Fa. Clariant GmbH. Die angegebenen Ethoxylierungsgrade stellen statistische Mittelwerte dar, die für ein spezielles Produkt eine ganze oder eine gebrochene Zahl sein können. Zusätzlich zu diesen können auch Fettalkohol-EO/PO-Addukte eingesetzt werden.

Bevorzugt handelt es sich bei dem Kompaktierhilfsmittel um Caprolactam und/oder Triphenylphosphat.

Bevorzugt handelt es sich bei dem Kompaktierhilfsmittel um Ethylenglykol, Propylenglykol und/oder Butylenglykol, deren Oligomere und/oder Polymere und/oder deren Ether. Bevorzugt sind weiterhin Polyethylenglycole H(OCH₂CH₂O)ₙOH mit Molekularmassen von 500 bis 40000 Besonders bevorzugt sind die Typen ®PEG 600, 800, 1000, 1500, 2000, 3000, 4000, 6000, 8000, 10000, 12000, 20000, 35000. Bevorzugt sind weiterhin Polyethylenglycolmonoalkylether, Polyethylenglycolmonoallylether, Polyethylenglycolmonovinylether.

Bevorzugt handelt es sich bei dem Kompaktierhilfsmittel um natürliche, chemisch modifizierte und/oder synthetische Wachse; bevorzugt um Carnaubawachse und Montanwachse. Montanwachse für die Kunststoffverarbeitung die Gleitmittel und interne Trennmittel für die Verarbeitung von Polyvinylchlorid, Polyolefinen, Polyamind, Polystyrol, linearen Polyestern, thermoplastischem Polyurethan, härtbaren Formmassen und anderen Kunststoffen sind. Sie sind Folgeprodukte der Raffination von Rohmontanwachs, das durch Extraktion von Braunkohle gewonnen wird. Sie stellen langkettige Carbonsäuren der Kettenlängen C₂₈-C₃₂, deren Voll- und Teilester mit Ethylenglykol Glycerin, Butylenglycol und Erdalkalisalze von teilhydrolysiereten Estern dar, z.B. ®Licowax E, ®Licowax WE 4 und ®Licowax OP.

Polyethylenwachse sind für den Polymerbereich (PVC, Gummi, Polyolefine) geeignet. z.B. ®Licowax PE 520, ®Licowax PE 810, ®Licowax PE 820, ®Licowax PE 830, ®Licowax PE 840, ®Licomont CaV, ®Licolub WE4, Ceridust 5551.

Bevorzugt handelt es sich bei dem Kompaktierhilfsmittel auch um Kunstharze, bevorzugt Phenolharze. Bevorzugt sind weiterhin Kunstharze, darunter werden nach DIN 55958 synthetische Harze verstanden, die durch Polymerisations-, Polyadditions- oder Polykondensationsreaktion hergestellt werden. Duroplaste ist eine Sammelbezeichnung für alle aus härtbaren Harzen hergestellten Kunststoffe. Zu den Duroplasten gehören Epoxidharze, Polyurethane, Phenolharze, Melaminharze sowie ungesättigte Polyesterharze. Bevorzugtes Phenolharz ist z.B. der Typ 28391 der Fa. Durez.

Der sich bildende Feststoffkörper (Schülpe) wird mechanisch durch Brechen in Körner zerkleinert, die klassiert werden. Dadurch wird die Korngröße optimal eingestellt. Das klassierte Produkt (Gutkorn) stellt die erfindungsgemäße rollkompaktierte Flammschutzmittelzusammensetzung dar.

Zur Mahlung eignen sich beispielsweise Hammermühlen, Prallmühlen Schwingmühlen, Kugelmühlen, Walzen- und Pendelrollmühlen der Fa. Neuman & Esser sowie Luftstrahlmühlen wie Typen der Fa. Hosokawa-Alpine. Als Klassierung dienen Sichtung und/oder Siebung. Zur Siebung können z.B. Allgeier-, Rhewum-, Locker-Siebe dienen.

Wahlweise können Mahlhilfsstoffe zugesetzt werden.

Ein solches Pressgranulat hat im Gegensatz zu einem Schmelzagglomerat den Vorteil, dass weniger Kompaktierhilfsmittel benötigt wird. Derartige Hilfsmittel werden bei der Schmelzagglomeration auch als Binder bezeichnet.

Überraschenderweise wurde gefunden, dass die erfindungsgemäßen pressgranulierten Flammschutzmittelzusammensetzungen ein sehr gutes Verteilungsverhalten im Kunststoff zeigen.

Ein weiteres bevorzugtes Pressgranulierungsverfahren ist das Strangpressen. Die Verdichtung der feinkörnigen Ausgangsstoffe erfolgt in Matrizen (2-achsig) und Ausstoßen als Strang. Dies erfordert innen einen bestimmten Bereich des Wandreibungswinkels bzw. der Gleiteigenschaften. Der Strang zerfällt ohne weitere Maßnahmen zu Zylindern unterschiedlicher Länge oder es erfolgt ein Abschlag mit Messern.

Bevorzugt werden phosphororganisches Flammschutzmittel und/oder Synergisten und schmelzbares Zinkphosphinat gemischt und stranggepresst und dann ggf. getrocknet und/oder gecoated.

Bevorzugt werden phosphororganisches Flammschutzmittel und/oder Synergisten und schmelzbares Zinkphosphinat gemischt, stranggepresst, gebrochen und klassiert und dann ggf. gecoated.

Bevorzugt werden phosphororganisches Flammschutzmittel und/oder Synergisten und schmelzbares Zinkphosphinat gemischt, stranggepresst, gebrochen und klassiert, getrocknet

Bevorzugt werden phosphororganisches Flammschutzmittel und/oder Synergisten und schmelzbares Zinkphosphinat gemischt, stranggepresst, gebrochen, klassiert, getrocknet und gecoated.

Das Strangpressen erfolgt bevorzugt bei 10 bis 500°C.

Bevorzugt sind dazu Granulierpressen der Fa. Kahl (z. B. Pressentype ®24-390/500), Pelettierpressen der Fa. Schlüter (Typen ®PP 85, PP 127, PP 200, PP 360), Benchtop Granulator der Fa. Fitzpatrick, Zweischnecken- oder Doppelschnecken-Extruder der Fa. Leistritz (Typen ®ZSE 27 / 40 / 50 / 60 / 75 / 100 / 135, ZSE 27 HP / 40 / 50 / 60 / 75 / 87), Laborextruder der Fa. Leistritz (Typen ®MICRO 18 / 27), Einschneckenextruder er Fa. Leistritz (Typen ®ESE 30 / 40 / 50 / 60 / 70 / 80 / 90 / 120 / 150 / 200), Wasserring-Granulatoren etc, Kreis-Kompaktor (Kollergang)

Bevorzugt können beim Strangpressen auch untergeordnete Mengen (bis zu 10 %) aus der Gruppe der Kompaktierungshilfsmittel ohne eigene Flammschutzwirkung eingesetzt werden.

Ein weiteres bevorzugtes Verfahren ist das Tablettieren und Brikettieren, das auf dem Verdichten von feinkörnigen Produkten in Matrizen mit 2 Stempeln oder in Kissenwalzen zu Tabletten oder Briketts beruht.

Bevorzugt werden phosphororganisches Flammschutzmittel und/oder Synergis und schmelzbares Zinkphosphinat gemischt, tablettiert oder brikettiert, gebrochen und klassiert, dann ggf. getrocknet und/oder gecoated.

Bevorzugt sind dazu Würfelpressen der Fa. Bühler (®KUBEX Modelle DPGC 900.178, DPGB 900.228) oder Walzenpressen der Fa. Köppern.

Bevorzugt können beim Tablettieren/Brikettieren auch untergeordnete Mengen (bis zu 10%) aus der Gruppe der Kompaktierungshilfsmittel ohne eigene Flammschutzwirkung eingesetzt werden.

Das Tablettieren/Brikettieren erfolgt bevorzugt bei 10 bis 300°C.

Die pressgranulierte Flammschutzmittelzusammensetzung kann in einem geeigneten Trockner getrocknet beziehungsweise getempert werden. Erfindungsgemäße Trockner können sein: Fließbetttrockner der Fa. Hosokawa Schugi (Typen: Schugi ®Fluid-Bed, ®Vometec Fließbett-Trockner), Wirbelbetttrockner der Fa. Waldner bzw. der Fa. Glatt, Turbo-Flugschichttrockner der Fa. Waldner, ®Spin-flash-Trockner der Fa. Anhydro sowie Trommeltrockner.

Bevorzugte Betriebsbedingungen im Fließbetttrockner sind: Lufteintrittstemperatur 120-280°C, Produkttemperatur 20 bis 200°C.

Die verbleibende Feuchte der erfindungsgemäßen kompaktierten Flammschutzmittelzusammensetzung (Restfeuchte) beträgt 0,01 bis 10 %, bevorzugt 0,05 bis 1 %.

Wahlweise kann die erfindungsgemäße pressgranulierte Flammschutzmittelzusammensetzung auch gecoated werden.

Bevorzugte Coatungsmittel sind solche aus der Gruppe der Diffusionshemmmittel, Gleitmittel und/oder Trennmittel.

Das Coaten erfolgt bevorzugt in einem der angeführten Misch- und/oder Trocknungsorgan indem das Coatungsmittel zugesetzt wird und 0,01 bis 1 Stunden bei 50 bis 300°C gemischt wird.

Die Erfindung betrifft auch eine flammgeschützte Polymerformmasse, die die erfindungsgemäße pressgranulierte Flammschutzmittelzusammensetzung enthält.

Bevorzugt enthält die flammgeschützte Polymerformmasse
1 bis 50 Gew.-% pressgranulierte Flammschutzmittelzusammensetzung,
1 bis 99 Gew.-% thermoplastisches Polymer oder Mischungen derselben.

Bevorzugt enthält die flammgeschützte Polymerformmasse
1 bis 50 Gew.-% pressgranulierte Flammschutzmittelzusammensetzung,
1 bis 99 Gew.-% thermoplastisches Polymer oder Mischungen derselben
0,1 bis 60 Gew.-% Additive
0,1 bis 60 Gew.-% Füllstoff bzw. Verstärkungsmaterialien.

Besonders bevorzugt enthält die flammgeschützte Polymerformmasse
5 bis 30 Gew.-% pressgranulierte Flammschutzmittelzusammensetzung,
5 bis 90 Gew.-% thermoplastisches Polymer oder Mischungen derselben
5 bis 40 Gew.-% Additive
5 bis 40 Gew.-% Füllstoff bzw. Verstärkungsmaterialien.

Die bevorzugte Restfeuchte der erfindungsgemäßen flammgeschützten Formmassen beträgt 0,01 bis 10 Gew.-%, besonders bevorzugt 0,1 bis 1 %.

Bevorzugt handelt es sich bei den Polymeren um Polymere von Mono- und Diolefinen, beispielsweise Polypropylen, Polyisobutylen, Polybuten-1, Poly-4-methylpenten-1, Polyisopren oder Polybutadien sowie Polymerisate von Cycloolefinen wie z.B. von Cyclopenten oder Norbornen; ferner Polyethylen (das gegebenenfalls vernetzt sein kann), z.B. Polyethylen hoher Dichte (HDPE), Polyethylen hoher Dichte und hoher Molmasse (HDPE-HMW), Polyethylen hoher Dichte und ultrahoher Molmasse (HDPE-UHMW), Polyethylen mittlerer Dichte (MDPE), Polyethylen niederer Dichte (LDPE), lineares Polyethylen niederer Dichte (LLDPE), verzweigtes Polyethylen niederer Dichte (VLDPE), sowie Mischungen davon.

Bevorzugt handelt es sich bei den Polymeren um Copolymere von Mono- und Diolefinen untereinander oder mit anderen Vinylmonomeren, wie z.B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat- Copolymere, Ethylen-Vinylacetat-Copolymere und deren Copolymere mit Kohlenstoffmonoxid, oder Ethylen-Acrylsäure-Copolymere und deren Salze (lonomere), sowie Terpolymere von Ethylen mit Propylen und einem Dien, wie Hexadien, Dicyclopentadien oder Ethylidennorbornen; ferner Mischungen solcher Copolymere und Polymere, z.B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere, LLDPE/Ethylen-Acrylsäure-Copolymere und alternierend oder statistisch aufgebaute Polyalkylen/Kohlenstoffmonoxid-Copolymere und deren Mischungen mit anderen Polymeren wie z.B. Polyamiden.

Bevorzugt handelt es sich bei den Polymeren um Kohlenwasserstoffharze (z.B. C₅-C₉) inklusive hydrierte Modifikationen davon (z.B. Klebrigmacherharze) und Mischungen von Polyalkylenen und Stärke.

Bevorzugt handelt es sich bei den Polymeren um Polystyrol, Poly-(p-methylstyrol), Poly-(alpha-methylstyrol).

Bevorzugt handelt es sich bei den Polymeren um Copolymere von Styrol oder alpha. Methylstyrol mit Dienen oder Acrylderivaten, wie z.B.Styrol-Butadien, Styrol-Acrylnitril, Styrol-Alkylmethacrylat, Styrol-Butadien-Alkylacrylat und-methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z.B. einem Polyacrylat, einem Dien-Polymeren oder einem Ethylen-Propylen-Dien-Terpolymeren; sowie Block-Copolymere des Styrols, wie z.B. Styrol-Butadien-Styrol, Styrol-Isopren-Styrol, Styrol-Ethylen/Butylen-Styrol oder Styrol-Ethylen/Propylen-Styrol.

Bevorzugt handelt es sich bei den Polymeren um Pfropfcopolymere von Styrol oder alpha -Methylstyrol, wie z.B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit Copolymeren, wie sie z.B. als so genannte ABS-, MBS-, ASA- oder AES-Polymere bekannt sind.

Bevorzugt handelt es sich bei den Polymeren um Halogenhaltige Polymere, wie z.B. Polychloropren, Chlorkautschuk, chloriertes und bromiertes Copolymer aus Isobutylen-Isopren (Halobutylkautschuk), chloriertes oder chlorsulfoniertes Polyethylen, Copolymere von Ethylen und chloriertem Ethylen, Epichlorhydrinhomo- und -copolymere, insbesondere Polymere aus halogenhaltigen Vinylverbindungen, wie z.B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.

Bevorzugt handelt es sich bei den Polymeren um Polymere, die sich von alpha , beta -ungesättigten Säuren und deren Derivaten ableiten, wie Polyacrylate und Polymethacrylate, mit Butylacrylat schlagzäh modifizierte Polymethylmethacrylate, Polyacrylamide und Polyacrylnitrile und Copolymere der genannten Monomeren untereinander oder mit anderen ungesättigten Monomeren, wie z.B. AcrylnitrilButadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.

Bevorzugt handelt es sich bei den Polymeren um Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit oben genannten Olefinen.

Bevorzugt handelt es sich bei den Polymeren um Homo- und Copolymere von cyclischen Ethern, wie Polyalkylenglykole, Polyethylenoxyd, Polypropylenoxyd oder deren Copolymere mit Bisglycidylethern.

Bevorzugt handelt es sich bei den Polymeren um Polyacetale, wie Polyoxymethylen, sowie solche Polyoxymethylene, die Comonomere, wie z.B. Ethylenoxid, enthalten; Polyacetale, die mit thermoplastischen Polyurethanen, Acrylaten oder MBS modifiziert sind.

Bevorzugt handelt es sich bei den Polymeren um Polyphenylenoxide und -sulfide und deren Mischungen mit Styrolpolymeren oder Polyamiden.

Bevorzugt handelt es sich bei den Polymeren um Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.

Bevorzugt handelt es sich bei den Polymeren um Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, 6/10, 6/9, 6/12, 4/6, 12/12, Polyamid 11, Polyamid 12, aromatische Polyamide ausgehend von m-Xylol, Diamin und Adipinsäure; Polyamide, hergestellt aus Hexamethylendiamin und Iso- und/oder Terephthalsäure und gegebenenfalls einem Elastomer als Modifikator, z.B. Poly-2,4,4-trimethylhexamethylenterephthalamid oder Poly-m-phenylenisophthalamid. Block-Copolymere der vorstehend genannten Polyamide mit Polyolefinen, Olefin-Copolymeren, lonomeren oder chemisch gebundenen oder gepfropften Elastomeren; oder mit Polyethern, wie z.B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").

Bevorzugt handelt es sich bei den Polymeren um Polyharnstoffe, Polyimide, Polyamidimide, Polyetherimide, Polyesterimide, Polyhydantoine und Polybenzimidazole.

Bevorzugt handelt es sich bei den Polymeren um Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylolcyclohexanterephthalat, Polyhydroxybenzoate, sowie Block-Polyetherester, die sich von Polyethern mit Hydroxylendgruppen ableiten; ferner mit Polycarbonaten oder MBS modifizierte Polyester.

Bevorzugt handelt es sich bei den Polymeren um Polycarbonate und Polyestercarbonate.
Bevorzugt handelt es sich bei den Polymeren um Polysulfone, Polyethersulfone und Polyetherketone.

Bevorzugt handelt es sich bei den Polymeren um vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.

Bevorzugt handelt es sich bei den Polymeren um trocknende und nicht-trocknende Alkydharze.

Bevorzugt handelt es sich bei den Polymeren um ungesättigte Polyesterharze, die sich von Copolyestern gesättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.

Bevorzugt handelt es sich bei den Polymeren um vernetzbare Acrylharze, die sich von substituierten Acrylsäureestern ableiten, wie z.B. von Epoxyacrylaten, Urethanacrylaten oder Polyesteracrylaten.

Bevorzugt handelt es sich bei den Polymeren um Alkydharze, Polyesterharze und Acrylatharze, die mit Melaminharzen, Harnstoffharzen, Isocyanaten, Isocyanuraten, Polyisocyanaten oder Epoxidharzen vernetzt sind.

Bevorzugt handelt es sich bei den Polymeren um vernetzte Epoxidharze, die sich von aliphatischen, cycloaliphatischen, heterocyclischen oder aromatischen Glycidylverbindungen ableiten, z.B. Produkte von Bisphenol-A-diglycidylethern, Bisphenol-F-diglycidylethern, die mittels üblichen Härtern wie z.B. Anhydriden oder Aminen mit oder ohne Beschleunigern vernetzt werden.

Bevorzugt handelt es sich bei den Polymeren um natürliche Polymere, wie Cellulose, Naturkautschuk, Gelatine, sowie deren polymerhomolog chemisch abgewandelte Derivate, wie Celluloseacetate, -propionate und -butyrate, bzw. die Celluloseether, wie Methylcellulose; sowie Kolophoniumharze und Derivate.

Bevorzugt handelt es sich bei den Polymeren um Mischungen (Polyblends) der vorgenannten Polymeren, wie z.B. PP/EPDM, Polyamid/EPDM oder ABS, PVC/EVA, PVC/ABS, PVC/MBS, PC/ABS, PBTP/ABS, PC/ASA, PC/PBT, PVC/CPE, PVC/Acrylate, POM/thermoplastisches PUR, PC/thermoplastisches PUR, POM/Acrylat, POM/MBS, PPO/HIPS, PPO/PA 6.6 und Copolymere, PA/HDPE, PA/PP, PA/PPO, PBT/PC/ABS oder PBT/PET/PC.

Die Erfindung betrifft auch ein Verfahren zur Herstellung von flammgeschützten Polymerformmassen, dadurch gekennzeichnet, dass die erfindungsgemäßen Flammschutzmittel-Zusammensetzungen ggf. mit weiteren Additiven gemischt werden und über einen Seiteneinzug in ein Compoundieraggregat eingezogen werden und bei höheren Temperaturen in der Polymerschmelze homogenisiert werden und anschließend der homogenisierte Polymerstrang abgezogen, gekühlt, portioniert und/oder getrocknet wird.

Bevorzugt entstammt das Compoundieraggregat aus der Gruppe der Einwellenextruder, Mehrzonenschnecken oder Doppelschneckenextruder. Bevorzugt betragen die Verarbeitungstemperaturen
bei Polystyrol 170 bis 200°C,
Polypropylen 200 bis 300°C,
Polyethylenterephthalat (PET) 250 bis 290°C,
Polybutylenterephthalat (PBT)230 bis 270°C,
Polyamid 6 (PA 6)260 bis 290°C,
Polyamid 6.6 (PA 6.6)260 bis 290°C,
Polycarbonat 280 bis 320°C.

Bevorzugt beträgt die wirksame Schneckenlängen (L) des Extruders (Compoundieraggregat) in Vielfachen des Schneckendurchmessers (D) 4 bis 200D, bevorzugt 10 bis 50D.

Erfindungsgemäß einsetzbare Compoundieraggregate sind Einwellenextruder bzw. Einschneckenextruder z.B. der Fa. Berstorff GmbH, Hannover und oder der Fa. Leistritz, Nürnberg.

Erfindungsgemäß einsetzbare Compoundieraggregate sind Mehrzonenschnecken-Extruder mit Dreizonenschnecken und/oder Kurzkompressionsschnecken.

Erfindungsgemäß einsetzbare Compoundieraggregate sind auch Ko-Kneter z.B. von Fa. Coperion Buss Compounding Systems, CH-Pratteln, z.B. ®MDK/E46-11D und/oder Laborkneter (®MDK 46 der Firma Buss, Schweiz mit L=11D).

Erfindungsgemäß einsetzbare Compoundieraggregate sind Doppelschneckenextruder z.B. der Fa. Coperion Werner & Pfleiderer GmbH & Co.KG, Stuttgart (®ZSK 25, ZSK30, ZSK 40, ZSK 58, ZSK MEGAcompounder 40, 50, 58, 70, 92, 119, 177, 250, 320, 350, 380) und/oder der Fa. Berstorff GmbH, Hannover, Leistritz Extrusionstechnik GmbH, Nürnberg.

Erfindungsgemäß einsetzbare Compoundieraggregate sind Ring-Extruder z.B. der Fa. 3+Extruder GmbH, Laufen mit einem Ring von drei bis zwölf kleinen Schnecken, die um einem statischen Kern rotieren und/oder Planetwalzenextruder z.B. der Fa. Entex, Bochum und/oder Entgasungs-Extruder und/oder Kaskadenextruder und/oder Maillefer-Schecken.

Erfindungsgemäß einsetzbare Compoundieraggregate sind Compounder mit gegenläufiger Doppelschnecke z.B. ®Compex 37- bzw. -70-Typen der Fa. Krauss-Maffei Berstorff.

Erfindungsgemäße wirksame Schneckenlängen sind bei Einwellenextrudern bzw. Einschneckenextrudern 20 bis 40D.

Erfindungsgemäße wirksame Schneckenlängen (L) bei Mehrzonenschneckenextudern sind z.B. 25D mit Einzugzone (L=10D), Übergangszone (L=6D), Ausstoßzone (L=9D).

Erfindungsgemäßen wirksame Schneckenlängen bei Doppelschneckenextrudern sind 8 bis 48D.

Die flammgeschützte Polymerformmasse liegt bevorzugt in Granulatform (Compound) vor. Das Granulat hat bevorzugt Zylinderform mit kreisförmiger, elliptischer oder unregelmäßiger Grundfläche, Kugelform, Kissenform, Würfelform, Quaderform, Prismenform.

Das Längen-zu-Durchmesser-Verhältnis des Granulates beträgt 1 zu 50 bis 50 zu 1, bevorzugt 1 zu 5 bis 5 zu 1.

Das Granulat hat bevorzugt einen Durchmesser von 0,5 bis 15mm, besonders bevorzugt von 2 bis 3 mm und bevorzugt eine Länge von 0,5 bis 15mm, besonders bevorzugt von 2 bis 5 mm. Das erhaltene Granulat wird z.B. 10 h bei 90°C im Umluftofen getrocknet.

Die Erfindung betrifft schließlich auch Polymer-Formkörper, -Filme, -Fäden und -Fasern, enthaltend die erfindungsgemäße pressgranulierte Flammschutzmittelzusammensetzung.

Bei dem Polymer der Polymer-Formkörper, -Filme, -Fäden und -Fasern handelt es sich um ein thermoplastisches oder duroplastisches Polymer.

Bevorzugt enthalten die Polymer-Formkörper, -Filme, -Fäden und -Fasern
1 bis 70 Gew.-% pressgranulierte Flammschutzmittelzusammensetzung,
1 bis 99 Gew.-% Polymer oder Mischungen derselben

Bevorzugt enthalten die Polymer-Formkörper, -Filme, -Fäden und -Fasern
1 bis 70 Gew.-% pressgranulierte Flammschutzmittelzusammensetzung,
1 bis 99 Gew.-% Polymer oder Mischungen derselben
0,1 bis 60 Gew.-% Additive
0,1 bis 60 Gew.-% Füllstoff bzw. Verstärkungsmaterialien.

Bevorzugt enthalten die Polymer-Formkörper, -Filme, -Fäden und -Fasern
50 bis 99 Gew.-% flammgeschützte Polymerformmasse.

Bevorzugt enthalten die Polymer-Formkörper, -Filme, -Fäden und -Fasern
50 bis 99 Gew.-% flammgeschützte Polymertormmasse,
1 bis 50 Gew.-% Polymer oder Mischungen derselben

Bevorzugt enthalten die Polymer-Formkörper, -Filme, -Fäden und -Fasern
50 bis 99 Gew.-% flammgeschützte Polymerformmasse,
1 bis 50 Gew.-% Polymer oder Mischungen derselben
0,1 bis 60 Gew.-% Additive
0,1 bis 60 Gew.-% Füllstoff bzw. Verstärkungsmaterialien.

Bevorzugt enthalten die Polymer-Formkörper, -Filme, -Fäden und -Fasern
70 bis 95 Gew.-% flammgeschützte Polymerformmasse.

Die erfindungsgemäße pressgranulierte Flammschutzmittelzusammensetzung wird bevorzugt in flammgeschützte Polymerformmassen angewendet, die weiter zur Erzeugung von Polymer-Formkörpern verwendet werden.

Bevorzugte Formen für Verstärkungsmaterialien für flammgeschützte Polymerformmassen und flammgeschützte Polymer-Formkörper sind Fasern, Vliese, Matten, Gewebe, Stränge, Bänder, Schläuche, Litzen, Massiv-, Form- und Hohlkörper.

Bevorzugte Materialien für Verstärkungsmaterialien für flammgeschützte Polymerformmassen und flammgeschützte Polymer-Formkörper sind anorganische Materialien wie E-Glas (Aluminium-Bor-Silicat-Glas für die allgemeine Kunststoffverstärkung und für elektrische Anwendungen), R-Glas und S-Glas (Spezialgläser für hohe mechanische Anforderungen auch bei erhöhter Temperatur, D-Glas (Spezialglas für erhöhte dielektrische Anforderungen auch bei erhöhter Temperatur, C-Glas (Alkali-Kalk-Glas mit erhöhtem Bor-Zusatz für besondere chemische Widerstandsfähigkeit), Quarz-Glas, Kohlenstoff, Mineralien, Metall (Stahl, Aluminium, Magnesium, Molybdän, Wolfram), Keramik (Metalloxide).

Bevorzugte Materialien für Verstärkungsmaterialien für flammgeschützte Polymerformmassen und flammgeschützte Polymer-Formkörper sind Polykondensate wie z.B. Polyamid-6 (z.B. ®Perlon), Polyamid-6.6 (z.B. ®Nylon), Polyamid-11 (z.B. ®Rilsan, ®Qiana), aromatische Polyamide (Poly-m-phenylenisophtalamid (z.B. ®Nomex), Poly-p-phenylenterephthalamid (z.B. ®Aramid, ®Kevlar)), Polyethylenglycolterephthalat (z.B. ®Dacron, ®Diolen, ®Terylene, ®Trevira, ®Vestan, etc.), Poly-1,4-dimethylencyclohexanterephthalat (z.B. ®Kodel, ®Vestan X 160, etc.), Polycarbonat, Polyurethan-Elastomere (z.B. ®Dorlastan, ®Lycra, etc.).

Bevorzugte Materialien für Verstärkungsmaterialien für flammgeschützte Polymerformmassen und flammgeschützte Polymer-Formkörper sind Polymerisate wie z.B. Polyethylen, Polypropylen, Polyacrylnitril-Homopolymer, Polyacrylnitril-Mischpolymer (z.B. ®Dralon, ®Orlon), Modacryle (z.B. ®Kanekalon, ®Venel), ataktisches Polyvinylchlorid (z.B. ®Rhovyl, ®Fibravyl), syndiotaktisches Polyvinylchlorid (z.B. ®Leavil), Polyvinylalkohol (z.B. ®Kuralon, ®Vinylal, ®Vinylon), Polytetrafluorethylen (z.B. ®Teflon, ®Hostaflon), Polystyrol (z.B. ®Polyfiber, ®Styroflex)

Bevorzugte Materialien für Verstärkungsmaterialien für flammgeschützte Polymerformmassen und flammgeschützte Polymer-Formkörper sind natürliche und halbsynthetische Fasern (Viscosecellulose, Kupfercellulose, Celluloseacetat, Cellulosetriacetat, Flachs, Hanf, Sisal, Jute, Ramie, Baumwolle).

Bevorzugte Dimensionen für Glas-Kurzfasern sind Längen von 0,01 bis 10mm und Durchmesser von 0,005 bis 0,015 mm.
Die Zugabe von Glasfasern zu Polyamiden innerhalb der erfindungsgemäßen Konzentrationsbereiche führt zu einer bedeutenden Steigerung bei Festigkeit, Steifheit, Erweichungstemperatur, Schleiffestigkeit und Formbeständigkeit.

Bevorzugte Additive für flammgeschützte Polymerformmassen und flammgeschützte Polymer-Formkörper sind Antioxidantien (z.B. Alkylierte Monophenole, Alkylthiomethylphenole , Hydrochinone und alkylierte Hydrochinone, Hydroxylierte Thiodiphenylether, Alkyliden-Bisphenole, O-, N- und S-Benzylverbindungen, Hydroxybenzylierte Malonate, Hydroxybenzyl-Aromaten, Triazinverbindungen, Benzylphosphonate, Acylaminophenole, Ester der beta -(3,5-Di-tert-butyl-4-hydroxyphenyl)-propionsäure mit ein- oder mehrwertigen Alkoholen, Ester der beta - (5-tert-Butvl-4-hvdroxy-3-methylphenyl)-propionsäure mit ein- oder mehrwertigen Alkoholen, Ester der beta -(3,5-Dicyclohexyl-4-hydroxyphenyl)-propionsäure mit ein- oder mehrwertigen Alkoholen, Ester der 3,5-Di-tert-butyl-4-hydroxyphenylessigsäure mit ein- oder mehrwertigen Alkoholen, Amide der beta -(3,5-Di-tert-butyl-4-hydroxyphenyl)-propionsäure, Ascorbinsäure (Vitamin C), Aminische Antioxidantien).

Bevorzugte Additive für flammgeschützte Polymerformmassen und flammgeschützte Polymer-Formkörper sind UV-Absorber und Lichtschutzmittel (2-(2'-Hydroxyphenyl)-benzotriazole, 2-Hydroxybenzophenone, Ester von gegebenenfalls substituierten Benzoesäuren, Acrylate; Nickelkomplexe des 2,2'-Thio-bis[4-(1,1,3,3-tetramethylbutyl)-phenols], Nickelsalze von 4-Hydroxy-3,5-di-tert-butylbenzylphosphonsäure-monoalkylestern, Nickelkomplexe von Ketoximen, Nickelkomplexe des 1-Phenyl-4-lauroyl-5-hydroxypyrazols, gegebenenfalls mit zusätzlichen Liganden; Sterisch gehinderte Amine, Oxalsäurediamide, 2-(2-Hydroxyphenyl)-1,3,5-triazine).

Bevorzugte Additive für flammgeschützte Polymerformmassen und flammgeschützte Polymer-Formkörper sind Gleitmittel, Farbmittel, Antistatika Nukleierungsmittel (wie z.B. anorganische Stoffe wie z.B. Talk, Metalloxide wie Titandioxid oder Magnesiumoxid, Phosphate, Carbonate oder Sulfate von vorzugsweise Erdalkalimetallen; organische Verbindungen wie Mono- oder Polycarbonsäuren sowie ihre Salze wie z.B. 4-tert-Butylbenzoesäure, Adipinsäure, Diphenylessigsäure, Natriumsuccinat oder Natriumbenzoat; polymere Verbindungen wie z.B. ionische Copolymerisate ("lonomere"))

Bevorzugte Additive für flammgeschützte Polymerformmassen und flammgeschützte Polymer-Formkörper sind Füllstoffe (wie z.B. Kreide und Calciumcarbonat, Silikate, Schichtsilicate Tonminerale z.B. Bentonite, Montmorillonite, Hectorite, Saponite, gefällte/pyrogene/kristalline/amorphe Kieselsäuren, Glaskugeln, Talk, Kaolin, Glimmer, Bariumsulfat, Metalloxide und -hydroxide, Oxide und/oder Hydroxide der Elemente der zweiten und dritten Hauptgruppe des Periodensystems der Elemente (bevorzugt Aluminium und Magnesium), Russ, Graphit, Holzmehl und Mehle oder Fasern anderer Naturprodukte, synthetische Fasern).

Die erfindungsgemäßen Füllstoffe und/oder Verstärkungsmatrialien können zur besseren Verträglichkeit mit dem Thermoplasten einer Silanverbindung oberflächlich vorbehandelt sein.

Geeignete Silanverbindungen sind solche der allgemeinen Formel

(X-(CH₂)ₙ)ₖ-Si-(O-CₘH₂ₘ₊₁)₂₋ₖ

in der die Substituenten folgende Bedeutung haben:
n eine ganze Zahl von 2 bis 10, bevorzugt 3 bis 4
m eine ganze Zahl von 1 bis 5, bevorzugt 1 bis 2
k eine ganze Zahl von 1 bis 3, bevorzugt 1.

Bevorzugte Silanverbindungen sind Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Die Silanverbindungen werden im Allgemeinen in Mengen von 0,05 bis 5, vorzugsweise 0,5 bis 1,5 und insbesondere 0,8 bis 1 Gew.-% (bezogen auf E) zur Oberflächenbeschichtung eingesetzt.

Beispiele für die verwendbaren Zusätze sind in EP-A-0 584 567 angegeben.

Die Erfindung betrifft schließlich auch ein Verfahren zur Herstellung von flammgeschützten Polymer-Formkörpern, dadurch gekennzeichnet, dass erfindungsgemäße flammgeschützte Polymer-Formmassen durch Spritzgießen (z.B. Spritzgießmaschine (Typ Aarburg Allrounder) und Pressen, Schaumspritzgießen, Gasinnendruck-Spritzgießen, Blasformen, Foliengießen, Kalandern, Laminieren oder Beschichten bei höheren Temperaturen zum flammgeschützten Polymer-Formkörper verarbeitet wird.

Bevorzugt betragen bei diesem Verfahren die Verarbeitungstemperaturen
bei Polystyrol 200 bis 250°C,
bei Polypropylen 200 bis 300°C,
bei Polyethylenterephthalat (PET) 250 bis 290°C,
bei Polybutylenterephthalat (PBT) 230 bis 270°C,
bei Polyamid 6 (PA 6) 260 bis 290°C,
bei Polyamid 6.6 (PA 6.6) 6.6 260 bis 290°C,
bei Polycarbonat 280 bis 320°C.

Überraschend wurde gefunden, dass die mechanischen Eigenschaften von flammgeschützten Polymerformkörpern, die auf den erfindungsgemäßen pressgranulierten Flammschutzmittelzusammensetzungen oder flammgeschützten Formmassen basieren, erheblich besser sind, als der Stand der Technik.

Bevorzugt beträgt der E-Modul von flammgeschützten Polymerformkörpern, die auf den erfindungsgemäßen pressgranulierten Flammschutzmittelzusammensetzungen oder flammgeschützten Formmassen und Polybutylenterephthalat basieren 10000 bis 12000 MPa.

Bevorzugt beträgt der E-Modul von flammgeschützten Polymerformkörpern, die auf den erfindungsgemäßen pressgranulierten Flammschutzmittelzusammensetzungen oder flammgeschützten Formmassen und Polyamid 6.6 basieren 10000 bis 12000 MPa.

Bevorzugt beträgt der E-Modul von Polymerformkörpern, die auf den erfindungsgemäßen pressgranulierten Flammschutzmittelzusammensetzungen oder flammgeschützten Formmassen und Polyamid 6 basieren 10000 bis 12000 MPa.

Bevorzugt beträgt die UL-94-Klassifizierung von Polymerformkörpern, die auf den erfindungsgemäßen pressgranulierten Flammschutzmittelzusammensetzungen oder flammgeschützten Formmassen basieren V-1 oder V-0.

Flammschutz-Beschichtung enthaltend mindestens
1 bis 50% kompaktierte Flammschutzmittelzusammensetzung
0,1 bis 60% Ammoniumpolyphosphat

### Experimentelles

### Bestimmung der Kornverteilung mit dem Microtrac Granulometer

Die Teilchengröße in wässriger Dispersion wird mit Hilfe eines Granulometer Microtrac ASVR/FRA der Fa. Leeds u. Northrup bestimmt. Gemessen wird die Reflexion bzw. Beugung eines Laserstrahls beim Durchdringen der Dispersion. Hierfür werden 400ml Ethanol durch die Lasermeßzelle gepumpt. Automatisch wird die Festkörperprobe (z.B. 70mg) zudosiert und nach 10 min die Teilchengrößenverteilung bestimmt. Die Auswertungseinheit des Gerätes berechnet den d50- und den d90-Wert.

### Rollkompaktieren

In einem Rollkompaktor (Firma Hosokawa-Bepex, Typ: L200/50P) wird das Ausgangsmaterial mit Hilfe einer Stopfschnecke zwischen die Kompaktorwalzen befördert (Einstellung: Stufe 2 bis 3). Dies geschieht so schnell, dass bei einer Auflagelänge von 50mm die gewünschte Linienpresskraft entsteht. Die Walzenumdrehung wird auf Stufe 2 gestellt und der Walzenspalt beträgt 0,1 mm. Die entstehenden Schülpen (Länge: ca. 50mm, Dicke: ca. 2-5 mm, Breite ca. 10-15 mm) werden in einer Hammermühle (Fa. Alpine, Typ UPZ) mit einem Sieblochdurchmesser von 5 mm bei einer Umdrehungszahl von 600 bis 1400 Upm gebrochen.

### Herstellung von Kornfraktionen

Von dem gebrochenen rollkompaktierten Produkt wird auf einem Elektroschwingsieb (Fa. Siemens) mit eingebautem 1,7 mm-Sieb zunächst das Grobkorn abgetrennt. Von dem Siebdurchgang wird mit einem zweiten Sieb (400 µm) das Unterkorn abgetrennt. Das auf dem Sieb zurückbleibende Material ist das Gutkorn. Das Grobkorn wird nochmals gebrochen und gesiebt.

### Strangpressen

Mit einem Leistritz ®ZSE 27-44-Doppelschneckenextruder werden aus Mischungen von phosphororganischem Flammschutzmittel und schmelzbarem Zinkphosphinat bzw. einer Mischung von phosphororganischem Flammschutzmittel, Synergist und schmelzbarem Zinkphosphinat bei Extrusionstemperaturen von ca. 200°C mittels Heissabschlag staubfreie und relativ bruchfeste Zylindergranulate erhalten.

### Bestimmung der Staubneigung

In eine Waschflasche werden 10 g des zu untersuchenden Materials eingewogen. Bei einem Gasstrom von 1 I/min wird durch das Material 20 min Stickstoff durchgeleitet. Die danach zurückbleibende Pulvermenge wird gewogen. Der ausgetragene Anteil wird durch die Einwaage dividiert und auf 100 % bezogen.

### Herstellung, Verarbeitung und Prüfung von flammgeschützten Polymerformmassen und flammgeschützten Polymerformkörpern

Die Flammschutzkomponenten werden mit dem Polymergranulat und evtl. Additiven vermischt und auf einem Doppelschnecken-Extruder (Typ Leistritz ®LSM 30/34) bei Temperaturen von 230 bis 260°C (PBT-GV) bzw. von 260 bis 280°C (PA 66-GV) eingearbeitet. Der homogenisierte Polymerstrang wurde abgezogen, im Wasserbad gekühlt und anschließend granuliert.

Nach ausreichender Trocknung wurden die Formmassen auf einer Spritzgießmaschine (Typ Aarburg Allrounder) bei Massetemperaturen von 240 bis 270°C (PBT-GV) bzw. von 260 bis 290°C (PA 66-GV) zu Prüfkörpern verarbeitet. Die Prüfkörper werden anhand des UL 94-Tests (Underwriter Laboratories) auf Flammwidrigkeit (Flammschutz) geprüft und klassifiziert.

An Prüfkörpern aus jeder Mischung wurden die Brandklasse UL 94 (Underwriter Laboratories) an Probekörpern der Dicke 1,5 mm bestimmt.

Nach UL 94 ergeben sich folgende Brandklassen:
V-0 kein Nachbrennen länger als 10 sec, Summe der Nachbrennzeiten bei 10 Beflammungen nicht größer als 50 sec, kein brennendes Abtropfen, kein vollständiges Abbrennen der Probe, kein Nachglühen der Proben länger als 30 sec nach Beflammungsende
V-1 kein Nachbrennen länger als 30 sec nach Beflammungsende, Summe der Nachbrennzeiten bei 10 Beflammungen nicht größer als 250 sec, kein Nachglühen der Proben länger als 60 sec nach Beflammungsende, übrige Kriterien wie bei V-0
V-2 Zündung der Watte durch brennendes Abtropfen, übrige Kriterien wie bei V-1
nicht klassifizierbar (nkl) erfüllt nicht die Brandklasse V-2.

### Beispiele

### Beispiel 1

Es werden 4,5 kg pulverförmiges (Di)Phosphinsäuresalz der Formel (I) und/oder (II) und/oder deren Polymere (mittlerer Teilchendurchmesser d₅₀ = 42 µm, Staubanteil d.h. Teilchengröße unter 20 µm: 15 %), 3,5 kg Melaminpolyphosphat und 2 kg schmelzbares Zinkphosphinat gemischt und entsprechend den allgemeinen Vorschriften "Rollkompaktieren" bei einer Linienpresskraft von 2 kN/cm kompaktiert und nach der allgemeinen Vorschrift "Herstellung von Kornfraktionen" zu einer Kornfraktion von 400 bis 1700 µm verarbeitet, deren Staubanteil d.h. Teilchengröße unter 20µm weniger als 1 % beträgt.

### Beispiel 2

Es werden 4,5 kg des gleichen pulverförmigens (Di)Phosphinsäuresalzes der Formel (I) und/oder (II) und/oder deren Polymere wie in Beispiel 1, 3,5 kg Melaminpolyphosphat und 2 kg schmelzbares Zinkphosphinat gemischt und entsprechend den allgemeinen Vorschriften "Rollkompaktieren" bei einer Linienpresskraft von 10 kN/cm kompaktiert und nach der allgemeinen Vorschrift "Herstellung von Kornfraktionen" zu einer Kornfraktion von 400 bis 1700 µm verarbeitet, deren Staubanteil d.h. Teilchengröße unter 20 µm weniger als 1 % beträgt.

### Beispiel 3 (Vergleich)

Es werden 4,5 kg des gleichen pulverförmigen (Di)Phosphinsäuresalzes der Formel (I) und/oder (II) und/oder deren Polymere wie in Beispiel 1, 3,5 kg Melaminpolyphosphat und 2 kg Polyethylenglycol gemischt und entsprechend den allgemeinen Vorschriften "Rollkompaktieren" bei einer Linienpresskraft von 10 kN/cm kompaktiert und nach der allgemeinen Vorschrift "Herstellung von Kornfraktionen" zu einer Kornfraktion von 400 bis 1700 µm verarbeitet, deren Staubanteil d.h. Teilchengröße unter 20 µm weniger als 1 % beträgt.

### Beispiel 4

Es werden 4,5 kg des gleichen pulverförmigen (Di)Phosphinsäuresalzes der Formel (I) und/oder (II) und/oder deren Polymere wie in Beispiel 1, 3,5 kg Melaminpolyphosphat und 2,00 kg schmelzbares Zinkphosphinat gemischt und entsprechend den allgemeinen Vorschriften "Rollkompaktieren" bei einer Linienpresskraft von 30 kN/cm kompaktiert und nach der allgemeinen Vorschrift "Herstellung von Kornfraktionen" zu einer Kornfraktion von 400 bis 1700 µm verarbeitet, deren Staubanteil d.h. Teilchengröße unter 20 µm weniger als 1 % beträgt.

### Beispiel 5 (Vergleich)

Es werden 9,9 kg Melaminpolyphosphat und 100 g schmelzbares Zinkphosphinat gemischt und entsprechend den allgemeinen Vorschriften "Rollkompaktieren" bei einer Linienpresskraft von 10 kN/cm kompaktiert und nach der allgemeinen Vorschrift "Herstellung von Kornfraktionen" zu einer Kornfraktion von 400 bis 1700 µm verarbeitet, deren Staubanteil d.h. Teilchengröße unter 20µm weniger als 1 % beträgt. Die Granulatausbeute ist gering, der Phosphorgehalt der pressgranulierten Flammschutzmittelzusammensetzung ist unterhalb des erfindungsgemäß bevorzugten Bereiches.

### Beispiel 6

Es werden 9,9 kg des gleichen pulverförmigen (Di)Phosphinsäuresalzes der Formel (I) und/oder (II) und/oder deren Polymere wie in Beispiel 1 und 100 g schmelzbares Zinkphosphinat gemischt und entsprechend den allgemeinen Vorschriften "Rollkompaktieren" bei einer Linienpresskraft von 10 kN/cm kompaktiert und nach der allgemeinen Vorschrift "Herstellung von Kornfraktionen" zu einer Kornfraktion von 400 bis 1700 µm verarbeitet, deren Staubanteil d.h. Teilchengröße unter 20 µm weniger als 1 % beträgt. Die Granulatausbeute ist gering.

### Beispiel 7

Es werden 9 kg des gleichen pulverförmigen (Di)Phosphinsäuresalzes der Formel (I) und/oder (II) und/oder deren Polymere wie in Beispiel 1, 800 g Melaminpolyphosphat und 200 g schmelzbares Zinkphosphinat gemischt und entsprechend den allgemeinen Vorschriften "Rollkompaktieren" bei einer Linienpresskraft von 10 kN/cm kompaktiert und nach der allgemeinen Vorschrift "Herstellung von Kornfraktionen" zu einer Kornfraktion von 400 bis 1700 µm verarbeitet, deren Staubanteil d.h. Teilchengröße unter 20 µm weniger als 1 % beträgt.

### Beispiel 8

Es werden 800 g des gleichen pulverförmigen (Di)Phosphinsäuresalzes der Formel (I) und/oder (II) und/oder deren Polymere wie in Beispiel 1, 9 kg Melaminpolyphosphat und 200 g schmelzbares Zinkphosphinat gemischt und entsprechend den allgemeinen Vorschriften "Rollkompaktieren" bei einer Linienpresskraft von 10 kN/cm kompaktiert und nach der allgemeinen Vorschrift "Herstellung von Kornfraktionen" zu einer Kornfraktion von 400 bis 1700 µm verarbeitet, deren Staubanteil d.h. Teilchengröße unter 20 µm weniger als 1 % beträgt.

### Beispiel 9

Es werden 8,5 kg des gleichen pulverförmigen (Di)Phosphinsäuresalzes der Formel (I) und/oder (II) und/oder deren Polymere wie in Beispiel 1, 1 kg Melaminpolyphosphat und 500 g schmelzbares Zinkphosphinat gemischt und entsprechend den allgemeinen Vorschriften "Rollkompaktieren" bei einer Linienpresskraft von 10 kN/cm kompaktiert und nach der allgemeinen Vorschrift "Herstellung von Kornfraktionen" zu einer Kornfraktion von 400 bis 1700 µm verarbeitet, deren Staubanteil d.h. Teilchengröße unter 20 µm weniger als 1 % beträgt.

### Beispiel 10

Es werden 1 kg des gleichen pulverförmigen (Di)Phosphinsäuresalzes der Formel (I) und/oder (II) und/oder deren Polymere wie in Beispiel 1, 8,5 kg Melaminpolyphosphat und 500 g schmelzbares Zinkphosphinat gemischt und entsprechend den allgemeinen Vorschriften "Rollkompaktieren" bei einer Linienpresskraft von 10 kN/cm kompaktiert und nach der allgemeinen Vorschrift "Herstellung von Kornfraktionen" zu einer Kornfraktion von 400 bis 1700 µm verarbeitet, deren Staubanteil d.h. Teilchengröße unter 20 µm weniger als 1 % beträgt.

### Beispiel 11

Es werden 3 kg des gleichen pulverförmigen (Di)Phosphinsäuresalzes der Formel (I) und/oder (II) und/oder deren Polymere wie in Beispiel 1, 3 kg Melaminpolyphosphat und 4 kg schmelzbares Zinkphosphinat gemischt und entsprechend den allgemeinen Vorschriften "Rollkompaktieren" bei einer Linienpresskraft von 10 kN/cm kompaktiert und nach der allgemeinen Vorschrift "Herstellung von Kornfraktionen" zu einer Kornfraktion von 400 bis 1700 µm verarbeitet, deren Staubanteil d.h. Teilchengröße unter 20 µm weniger als 1 % beträgt.

### Beispiel 12

Es werden 4,5 kg des gleichen pulverförmigen (Di)Phosphinsäuresalzes der Formel (I) und/oder (II) und/oder deren Polymere wie in Beispiel 1, 0,5 kg Melaminpolyphosphat und 5 kg schmelzbares Zinkphosphinat gemischt und entsprechend den allgemeinen Vorschriften "Rollkompaktieren" bei einer Linienpresskraft von 10 kN/cm kompaktiert und nach der allgemeinen Vorschrift "Herstellung von Kornfraktionen" zu einer Kornfraktion von 400 bis 1700 µm verarbeitet, deren Staubanteil d.h. Teilchengröße unter 20 µm weniger als 1 % beträgt.

### Beispiel 13

Es werden 0,5 kg des gleichen pulverförmigen (Di)Phosphinsäuresalzes der Formel (I) und/oder (II) und/oder deren Polymere wie in Beispiel 1, 4,5 kg Melaminpolyphosphat und 5 kg schmelzbares Zinkphosphinat gemischt und entsprechend den allgemeinen Vorschriften "Rollkompaktieren" bei einer Linienpresskraft von 10 kN/cm kompaktiert und nach der allgemeinen Vorschrift "Herstellung von Kornfraktionen" zu einer Kornfraktion von 400 bis 1700 µm verarbeitet, deren Staubanteil d.h. Teilchengröße unter 20 µm weniger als 1 % beträgt.

### Beispiel 14

Es werden 9,8 kg des gleichen pulverförmigen (Di)Phosphinsäuresalzes der Formel (I) und/oder (II) und/oder deren Polymere wie in Beispiel 1 und 200 g schmelzbares Zinkphosphinat gemischt und entsprechend den allgemeinen Vorschriften "Rollkompaktieren" bei einer Linienpresskraft von 10 kN/cm kompaktiert und nach der allgemeinen Vorschrift "Herstellung von Kornfraktionen" zu einer Kornfraktion von 400 bis 1700 µm verarbeitet, deren Staubanteil d.h. Teilchengröße unter 20 µm weniger als 1 % beträgt.

### Beispiel 15

Es werden 9,5 kg des gleichen pulverförmigen (Di)Phosphinsäuresalzes der Formel (I) und/oder (II) und/oder deren Polymere wie in Beispiel 1 und 500 g schmelzbares Zinkphosphinat gemischt und entsprechend den allgemeinen Vorschriften "Rollkompaktieren" bei einer Linienpresskraft von 10 kN/cm kompaktiert und nach der allgemeinen Vorschrift "Herstellung von Kornfraktionen" zu einer Kornfraktion von 400 bis 1700 µm verarbeitet, deren Staubanteil d.h. Teilchengröße unter 20 µm weniger als 1 % beträgt.

### Beispiel 16

Es werden 5 kg des gleichen pulverförmigen (Di)Phosphinsäuresalzes der Formel (I) und/oder (II) und/oder deren Polymere wie in Beispiel 1 und 5 kg schmelzbares Zinkphosphinat gemischt und entsprechend den allgemeinen Vorschriften "Rollkompaktieren" bei einer Linienpresskraft von 10 kN/cm kompaktiert und nach der allgemeinen Vorschrift "Herstellung von Kornfraktionen" zu einer Kornfraktion von 400 bis 1700 µm verarbeitet, deren Staubanteil d.h. Teilchengröße unter 20 µm weniger als 1 beträgt.

### Beispiel 17

Es werden 5,33 kg des gleichen pulverförmigen (Di)Phosphinsäuresalzes der Formel (I) und/oder (II) und/oder deren Polymere wie in Beispiel 1, 2,67 kg Melaminpolyphosphat und 2 kg schmelzbares Zinkphosphinat gemischt und entsprechend der allgemeinen Vorschrift "Strangpressen" staubfreie und relativ bruchfeste Zylindergranulate erhalten.

### Beispiel 18

Es werden 8 kg des gleichen pulverförmigen (Di)Phosphinsäuresalzes der Formel (I) und/oder (II) und/oder deren Polymere wie in Beispiel 1 und 2 kg schmelzbares Zinkphosphinat gemischt und entsprechend der allgemeinen Vorschrift "Strangpressen" staubfreie und relativ bruchfeste Zylindergranulate erhalten.

### Beispiel 19

Gemäß der allgemeinen Vorschrift wird eine Mischung von 53 Gew.-% Polyamid 6.6 (®Ultramid A3), 30 Gew.-% Glasfasern (®Vetrotex EC 10 4,5mm 98A), 17 Gew.-% der pressgranulierten Flammschutzmittelzusammensetzung aus Beispiel 2 auf einem Doppelschnecken-Extruder zu Polymerformmassen compoundiert. Nach Trocknung werden die Formmassen auf einer Spritzgießmaschine bei 260 bis 290°C zu Polymerformkörpern verarbeitet. Die Elastizitäts- und Festigkeitswerte der Polymerformkörper sind gut, es wird eine UL-94 Klassifizierung von V-0 erhalten. Die Elastizitäts- und Festigkeitswerte der Formkörper sind besser als bei den Vergleichsbeispielen 21 und 22.

### Beispiel 21, Vergleich

Gemäß der allgemeinen Vorschrift wird eine Mischung von 53 Gew.-% Polyamid 6.6 (®Ultramid A3), 30 Gew.-% Glasfasern (®Vetrotex EC 10 4,5mm 98A), 17 Gew.-% der pressgranulierten Flammschutzmittelzusammensetzung aus Beispiel 3 auf einem Doppelschnecken-Extruder zu Polymerformmassen compoundiert. Nach Trocknung werden die Formmassen auf einer Spritzgießmaschine bei 260 bis 290°C zu Polymerformkörpern verarbeitet. Bei Verwendung der pressgranulierten Flammschutzmittelzusammensetzung wird eine gegenüber Beispiel 19 schlechtere UL-94 Klassifizierung von V-2 erhalten.

### Beispiel 22

Gemäß der allgemeinen Vorschrift wird eine Mischung von 53 Gew.-% Polyamid 6.6 (®Ultramid A3), 30 Gew.-% Glasfasern (®Vetrotex EC 10 4,5mm 98A), 17 Gew.-% der pressgranulierten Flammschutzmittelzusammensetzung aus Beispiel 6 auf einem Doppelschnecken-Extruder zu Polymerformmassen compoundiert. Nach Trocknung werden die Formmassen auf einer Spritzgießmaschine bei 260 bis 290°C zu Polymerformkörpern verarbeitet. Es wird zwar eine günstige UL-94 Klassifizierung von V-0 erhalten, auch ist der Phosphorgehalt der pressgranulierten Flammschutzmittelzusammensetzung ist innerhalb des erfindungsgemäß beanspruchten Bereiches, doch ist die Granulatausbeute zu gering.

### Beispiel 23

Gemäß der allgemeinen Vorschrift wird eine Mischung von 53 Gew.-% Polyamid 6.6 (®Ultramid A3), 30 Gew.-% Glasfasern (®Vetrotex EC 10 4,5mm 98A), 17 Gew.-% der pressgranulierten Flammschutzmittelzusammensetzung aus Beispiel 7 auf einem Doppelschnecken-Extruder zu Polymerformmassen compoundiert. Nach Trocknung werden die Formmassen auf einer Spritzgießmaschine bei 260 bis 290°C zu Polymerformkörpern verarbeitet. Es wird zwar eine günstige UL-94 Klassifizierung von V-0 erhalten, der Phosphorgehalt der pressgranulierten Flammschutzmittelzusammensetzung ist innerhalb des erfindungsgemäß beanspruchten Bereiches und die Granulatausbeute ist hoch. Die Elastizitäts- und Festigkeitswerte der Formkörper sind besser als bei den Vergleichsbeispielen 20 und 21.

### Beispiel 24

Gemäß der allgemeinen Vorschrift wird eine Mischung von 53 Gew.-% Polyamid 6.6 (®Ultramid A3), 30 Gew.-% Glasfasern (®Vetrotex EC 10 4,5mm 98A), 17 Gew.-% der pressgranulierten Flammschutzmittelzusammensetzung aus Beispiel 8 auf einem Doppelschnecken-Extruder zu Polymerformmassen compoundiert. Nach Trocknung werden die Formmassen auf einer Spritzgießmaschine bei 260 bis 290°C zu Polymerformkörpern verarbeitet. Es wird zwar eine ausreichende UL-94 Klassifizierung von V-1 erhalten, der Phosphorgehalt der pressgranulierten Flammschutzmittelzusammensetzung ist innerhalb des erfindungsgemäß beanspruchten Bereiches und die Granulatausbeute ist hoch. Die Elastizitäts- und Festigkeitswerte der Formkörper sind besser als bei den Vergleichsbeispielen 20 und 21.

### Beispiel 25

Gemäß der allgemeinen Vorschrift wird eine Mischung von 53 Gew.-% Polyamid 6.6 (®Ultramid A3), 30 Gew.-% Glasfasern (®Vetrotex EC 10 4,5mm 98A), 17 Gew.-% der pressgranulierten Flammschutzmittelzusammensetzung aus Beispiel 9 auf einem Doppelschnecken-Extruder zu Polymerformmassen compoundiert. Nach Trocknung werden die Formmassen auf einer Spritzgießmaschine bei 260 bis 290°C zu Polymerformkörpern verarbeitet. Es wird zwar eine günstige UL-94 Klassifizierung von V-0 erhalten, der Phosphorgehalt der pressgranulierten Flammschutzmittelzusammensetzung ist innerhalb des erfindungsgemäß beanspruchten Bereiches und die Granulatausbeute ist hoch.

### Beispiel 26

Gemäß der allgemeinen Vorschrift wird eine Mischung von 53 Gew.-% Polyamid 6.6 (&Ultramid A3), 30 Gew.-% Glasfasern (®Vetrotex EC 10 4,5mm 98A), 17 Gew.-% der pressgranulierten Flammschutzmittelzusammensetzung aus Beispiel 10 auf einem Doppelschnecken-Extruder zu Polymerformmassen compoundiert. Nach Trocknung werden die Formmassen auf einer Spritzgießmaschine bei 260 bis 290°C zu Polymerformkörpern verarbeitet. Es wird zwar eine günstige UL-94 Klassifizierung von V-0 erhalten, der Phosphorgehalt der pressgranulierten Flammschutzmittelzusammensetzung ist innerhalb des erfindungsgemäß beanspruchten Bereiches und die Granulatausbeute ist hoch.

### Beispiel 27

Gemäß der allgemeinen Vorschrift wird eine Mischung von 53 Gew.-% Polyamid 6.6 (®Ultramid A3), 30 Gew.-% Glasfasern (®Vetrotex EC 10 4,5mm 98A), 17 Gew.-% der pressgranulierten Flammschutzmittelzusammensetzung aus Beispiel 11 auf einem Doppelschnecken-Extruder zu Polymerformmassen compoundiert. Nach Trocknung werden die Formmassen auf einer Spritzgießmaschine bei 260 bis 290°C zu Polymerformkörpern verarbeitet. Es wird zwar eine günstige UL-94 Klassifizierung von V-0 erhalten, der Phosphorgehalt der pressgranulierten Flammschutzmittelzusammensetzung ist innerhalb des erfindungsgemäß beanspruchten Bereiches und die Granulatausbeute ist hoch.

### Beispiel 28

Gemäß der allgemeinen Vorschrift wird eine Mischung von 53 Gew.-% Polyamid 6.6 (®Ultramid A3), 30 Gew.-% Glasfasern (®Vetrotex EC 10 4,5mm 98A), 17 Gew.-% der pressgranulierten Flammschutzmittelzusammensetzung aus Beispiel 12 auf einem Doppelschnecken-Extruder zu Polymerformmassen compoundiert. Nach Trocknung werden die Formmassen auf einer Spritzgießmaschine bei 260 bis 290°C zu Polymerformkörpern verarbeitet. Es wird zwar eine günstige UL-94 Klassifizierung von V-0 erhalten, der Phosphorgehalt der pressgranulierten Flammschutzmittelzusammensetzung ist innerhalb des erfindungsgemäß beanspruchten Bereiches und die Granulatausbeute ist hoch.

### Beispiel 29

Gemäß der allgemeinen Vorschrift wird eine Mischung von 53 Gew.-% Polyamid 6.6 (®Ultramid A3), 30 Gew.-% Glasfasern (®Vetrotex EC 10 4,5mm 98A), 17 Gew.-% der pressgranulierten Flammschutzmittelzusammensetzung aus Beispiel 13 auf einem Doppelschnecken-Extruder zu Polymerformmassen compoundiert. Nach Trocknung werden die Formmassen auf einer Spritzgießmaschine bei 260 bis 290°C zu Polymerformkörpern verarbeitet. Es wird zwar eine günstige UL-94 Klassifizierung von V-0 erhalten, der Phosphorgehalt der pressgranulierten Flammschutzmittelzusammensetzung ist innerhalb des erfindungsgemäß beanspruchten Bereiches und die Granulatausbeute ist hoch.

### Beispiel 30

Gemäß der allgemeinen Vorschrift wird eine Mischung von 53 Gew.-% Polyamid 6.6 (®Ultramid A3), 30 Gew.-% Glasfasern (®Vetrotex EC 10 4,5mm 98A), 17 Gew.-% der pressgranulierten Flammschutzmittelzusammensetzung aus Beispiel 14 auf einem Doppelschnecken-Extruder zu Polymerformmassen compoundiert. Nach Trocknung werden die Formmassen auf einer Spritzgießmaschine bei 260 bis 290°C zu Polymerformkörpern verarbeitet. Es wird zwar eine günstige UL-94 Klassifizierung von V-0 erhalten, der Phosphorgehalt der pressgranulierten Flammschutzmittelzusammensetzung ist innerhalb des erfindungsgemäß beanspruchten Bereiches und die Granulatausbeute ist hoch.

### Beispiel 31

Gemäß der allgemeinen Vorschrift wird eine Mischung von 53 Gew.-% Polyamid 6.6 (®Ultramid A3), 30 Gew.-% Glasfasern (®Vetrotex EC 10 4,5mm 98A), 17 Gew.-% der pressgranulierten Flammschutzmittelzusammensetzung aus Beispiel 15 auf einem Doppelschnecken-Extruder zu Polymerformmassen compoundiert. Nach Trocknung werden die Formmassen auf einer Spritzgießmaschine bei 260 bis 290°C zu Polymerformkörpern verarbeitet. Es wird zwar eine günstige UL-94 Klassifizierung von V-0 erhalten, der Phosphorgehalt der pressgranulierten Flammschutzmittelzusammensetzung ist innerhalb des erfindungsgemäß beanspruchten Bereiches und die Granulatausbeute ist hoch. Die Elastizitäts- und Festigkeitswerte der Formkörper sind besser als bei den Vergleichsbeispielen 21 und 22.

### Beispiel 32

Gemäß der allgemeinen Vorschrift wird eine Mischung von 53 Gew.-% Polyamid 6.6 (®Ultramid A3), 30 Gew.-% Glasfasern (®Vetrotex EC 10 4,5mm 98A), 17 Gew.-% der pressgranulierten Flammschutzmittelzusammensetzung aus Beispiel 16 auf einem Doppelschnecken-Extruder zu Polymerformmassen compoundiert. Nach Trocknung werden die Formmassen auf einer Spritzgießmaschine bei 260 bis 290°C zu Polymerformkörpern verarbeitet. Es wird zwar eine günstige UL-94 Klassifizierung von V-0 erhalten, der Phosphorgehalt der pressgranulierten Flammschutzmittelzusammensetzung ist innerhalb des erfindungsgemäß beanspruchten Bereiches und die Granulatausbeute ist hoch.

### Verwendete Substanzen

Phosphororganisches Flammschutzmittel: ®Exolit OP 1230, Fa. Clariant GmbH, Phosphor-Gehalt: 23,8 Gew.-%
Synergist: ®Melapur 200/70, Firma Ciba-DSM Melapur, Phosphor-Gehalt: 13,4 Gew.-%
schmelzbares Zinkphosphinat: ®Exolit OP 950 (TP), Fa. Clariant GmbH, Phosphor- Gehalt: 20,2 Gew.-%
Polyethylenglycol: Polyethylenglycol ®PEG 4000, Fa. Clariant, Phosphor-Gehalt: 0 Gew.-%

**Tabelle 1**

| Beispiel | Phosphor-organisches Flammschutzmittel | Synergist | schmelzbares Zinkphosphinat | PEG | Linien Press-kraft | Ausbeute | P-Gehalt (d.press-gran.Fl.sc h.zuss.) |
|---|---|---|---|---|---|---|---|
| | Gew.-% | Gew.-% | Gew.-% | Gew.-% | kN/cm | % | Gew.-% |
| 1 | 45 ,0 | 35 ,0 | 20 | | 2 | 54 | 19,5 |
| 2 | 45 ,0 | 35 ,0 | 20 | | 10 | 66 | 19,5 |
| 3 (Vgl) | 45 ,0 | 35,0 | | 20 | 10 | 68 | 15,4 |
| 4 | 45 ,0 | 35,0 | 20 | | 30 | 71 | 19,5 |
| 5 (Vgl) | 0,0 | 99,0 | 1 | | 10 | 32 | 13,5 |
| 6 | 99 ,0 | 0 ,0 | 1 | | 10 | 35 | 23 ,8 |
| 7 | 90,0 | 8 ,0 | 2 | | 10 | 46 | 22 ,9 |
| 8 | 8.0 | 90,0 | 2 | | 10 | 42 | 14,4 |
| 9 | 85 ,0 | 10,0 | 5 | | 10 | 56 | 22,6 |
| 10 | 10,0 | 85,0 | 5 | | 10 | 58 | 14,8 |
| 11 | 30 ,0 | 30,0 | 40 | | 10 | 64 | 19,2 |
| 12 | 45 ,0 | 5,0 | 50 | | 10 | 66 | 21,5 |
| 13 | 5 ,0 | 45 ,0 | 50 | | 10 | 60 | 17,3 |
| 14 | 98 | 0 | 2 | | 10 | 48 | 23 ,8 |
| 15 | 95 | 0 | 5 | | 10 | 53 | 23,7 |
| 16 | 50 ,0 | 0,0 | 50 | | 10 | 70 | 22 ,0 |

**Tabelle 2**

| Beispiel | Pressgranulierte Flammschutzmittelzusammensetzung | E-Modul | Zugfestigkeit | UL 94-Klassifiz ierung (0,8mm) |
|---|---|---|---|---|
| | | [MPa] | [N/mm2] | |
| | 19 Beispiel 2 | 9300 | 176 | V-0 |
| 20 (Vgl) | Beispiel 2 Überkorn | 7900 | 60 | V-1 |
| 21 (Vgl) | Beispiel 3 (Vgl) | | | V-2 |
| 22 | Beispiel 6 | 8600 | 120 | V-0 |
| 23 | Beispiel 7 | 8600 | 110 | V-0 |
| 24 | Beispiel 8 | | | V-1 |
| 25 | Beispiel 9 | | | V-0 |
| 26 | Beispiel 10 | | | V-0 |
| 27 | Beispiel 11 | | | V-0 |
| 28 | Beispiel 12 | | | V-0 |
| 29 | Beispiel 13 | | | V-0 |
| 30 | Beispiel 14 | | | V-0 |
| 31 | Beispiel 15 | 8800 | 126 | V-0 |
| 32 | Beispiel 16 | | | V-0 |

## Patentansprüche

1. Pressgranulierte Flammschutzmittelzusammensetzung, **dadurch gekennzeichnet, dass** sie ein Phosphinsäuresalz der Formel (I) und/oder ein Diphosphinsäuresalz der Formel (II) und/oder deren Polymere, 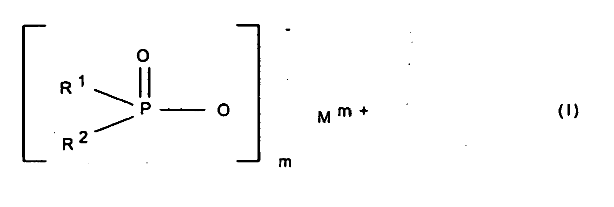 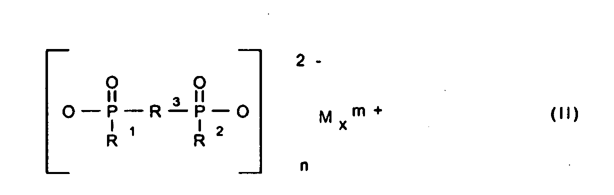 worin
R¹, R² gleich oder verschieden sind und C₁-C₆-Alkyl, linear oder verzweigt und/oder Aryl; R³ C₁-C₁₀-Alkylen, linear oder verzweigt, C₆-C₁₀-Arylen, -Alkylarylen oder -Arylalkylen; M Mg, Ca, Al, Sb, Sn, Ge, Ti, Fe, Zr, Ce, Bi, Sr, Mn, Li, Na, K und/oder eine protonierte Stickstoffbase; m 1 bis 4; n 1 bis 4; x 1 bis 4 bedeuten, und ein schmelzbares Zinkphosphinat enthält, wobei die schmelzbaren Zinkphosphinate der Formel (I) und/oder deren Polymeren, 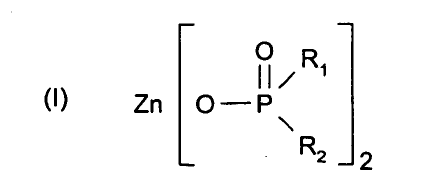 worin
R¹, R² gleich oder verschieden sind und Wasserstoff, C₁-C₁₈-Alkyl, linear oder verzweigt und/oder Aryl bedeuten, sowie einen Schmelzpunkt zwischen 40 und 250°C aufweisen, entsprechen und das schmelzbare Zinkphosphinat einen 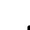 Phosphorgehalt von 10 - 35 Gew.-% aufweist sowie die pressgranulierte Flammschutzmittelzusammensetzung
a) 50 bis 98 Gew.-% (Di)Phosphinsäuresalz der Formel (I) und/oder (II) und/oder deren Polymere und
b) 2 bis 50 Gew.-% schmelzbares Zinkphosphinat enthält.

2. Pressgranulierte Flammschutzmittelzusammensetzung nach Anspruch 1, **dadurch gekennzeichnet, dass** es sich bei dem Zinkphosphinat um Dimethylphosphinsäure-Zinksalz, Methylethylphosphinsäure-Zinksalz, Diphenylphosphinsäure-Zinksalz und/oder Diethylphosphinsäure-Zinksalz handelt.

3. Pressgranulierte Flammschutzmittelzusammensetzung nach Anspruch 1 oder 2, **dadurch gekennzeichnet, dass** das schmelzbare Zinkphosphinat einen Phosphorgehalt von 15 bis 25 Gew.-% aufweist.

4. Pressgranulierte Flammschutzmittelzusammensetzung nach einem oder mehreren der Ansprüche 1 bis 3, **dadurch gekennzeichnet, dass** sie weiterhin mindestens einen Synergisten enthält.

5. Pressgranulierte Flammschutzmittelzusammensetzung nach einem oder mehreren der Ansprüche 1 bis 4, **dadurch gekennzeichnet, dass** es sich bei dem Synergisten um Melaminphosphat, Dimelaminphosphat, Melaminpyrophosphat, Melaminpolyphosphate, Melampolyphosphate, Melempolyphosphate und/oder Melonpolyphosphate; um Melaminkondensationsprodukte wie Melam, Melem und/oder Melon; um oligomere Ester des Tris(hydroxyethyl)isocyanurats mit aromatischen Polycarbonsäuren, Benzoguanamin, Tris(hydroxyethyl)isocyanurat, Allantoin, Glycouril, Melamin, Melamincyanurat, Dicyandiamid und/oder Guanidin; um stickstoffhaltige Phosphate der Formeln (NH₄)_{y} H_{3-y} PO₄ bzw. (NH₄ PO₃)_{z}, mit y gleich 1 bis 3 und z gleich 1 bis 10.000, handelt.

6. Pressgranulierte Flammschutzmittelzusammensetzung nach einem oder mehreren der Ansprüche 1 bis 4, **dadurch gekennzeichnet, dass** es sich bei dem Synergisten um Stickstoffverbindungen der Formeln (III) bis (VIII) oder Gemische davon 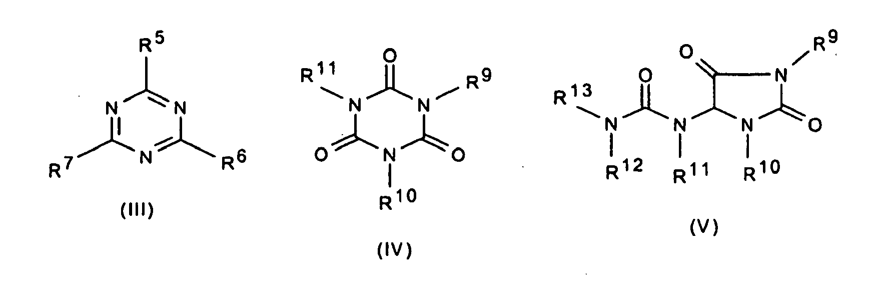 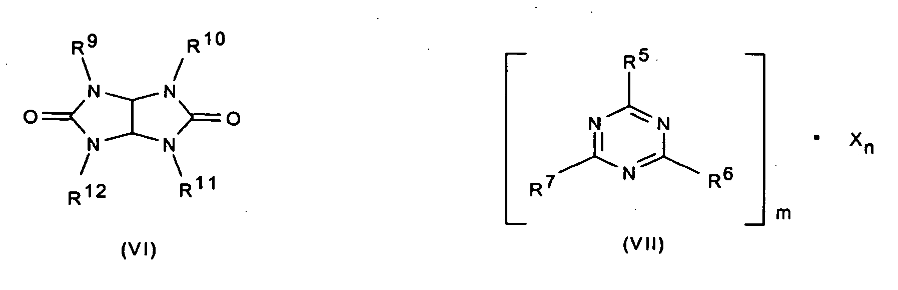 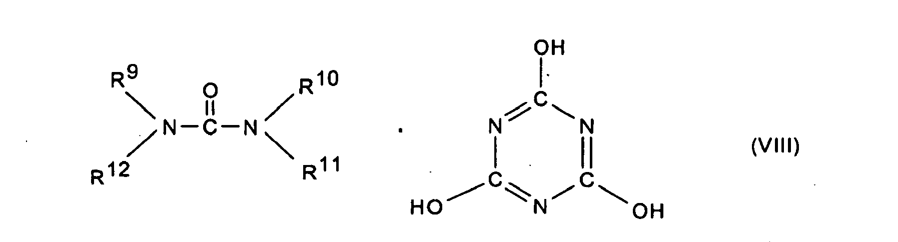 worin
R⁵ bis R⁷ Wasserstoff, C₁-C₈-Alkyl, C₅-C₁₆-Cycloalkyl oder -Alkylcycloalkyl, ggf. substituiert mit einer Hydroxy- oder einer C₁-C₄-Hydroxyalkyl-Funktion, C₂-C₈- Alkenyl, C₁-C₈-Alkoxy, -Acyl, -Acyloxy, C₆-C₁₂-Aryl oder -Arylalkyl, -OR⁸ und -N(R⁸)R⁹, sowie N-alicyclisch oder N-aromatisch,
R⁸ Wasserstoff, C₁-C₈-Alkyl, C₅-C₁₆-Cycloalkyl oder -Alkylcycloalkyl, ggf. substituiert mit einer Hydroxy- oder einer C₁-C₄-Hydroxyalkyl-Funktion, C₂-C₈- Alkenyl, C₁-C₈-Alkoxy, -Acyl, -Acyloxy oder C₆-C₁₂-Aryl oder -Arylalkyl,
R⁹ bis R¹³ die gleichen Gruppen wie R⁸ sowie -O-R⁸,
m und n unabhängig voneinander 1, 2, 3 oder 4, X Säuren, die Addukte mit Triazinverbindungen (III) bilden können, bedeuten, handelt.

7. Pressgranulierte Flammschutzmittelzusammensetzung nach einem oder mehreren der Ansprüche 1 bis 4, **dadurch gekennzeichnet, dass** es sich bei den Synergisten um Zinkoxid, Zinkhydroxid, Zinkoxidhydrat, wasserfreies Zinkcarbonat, basisches Zinkcarbonat, Zinkhydroxidcarbonat, basisches Zinkcarbonathydrat, (basisches) Zinksilicat, Zinkhexafluorosilicat, Zinkstannat, Zink-Magnesium-Aluminium-Hydroxid-Carbonat, Zinkhexafluorosilicathexahydrat, Zinksalze der Oxosäuren der dritten Hauptgruppe wie Zinkborat, Zinksalze der Oxosäuren der fünften Hauptgruppe wie Zinkphosphat, Zinkpyrophosphat, Zinksalze der Oxosäuren der Übergangsmetalle, wie Zinkchromat(VI)hydroxyd (Zinkgelb), Zinkchromit, Zinkmolybdat, Zinkpermanganat, Zinkmolybdat-Magnesiumsilicat oder Zinkpermanganat; und/oder um solche mit organischen Anionen, wie Zinksalze von Mono-, Di-, Oligo-, Polycarbonsäuren (Salze der Ameisensäure (Zinkformiate), der
Essigsäure (Zinkacetate, Zinkacetatdihydrat, Galzin), der Trifluoressigsäure (Zinktrifluoracetat hydrat), Zinkpropionat, Zinkbutyrat, Zinkvalerat, Zinkcaprylat, Zinkoleat, Zinkstearat, der Oxalsäure (Zinkoxalat ), der Weinsäure (Zinktartrat), Citronensäure (tribasisches Zinkcitrat dihydrat), Benzoesäure (Benzoat), Zinksalicylat, Milchsäure (Zinklactat, Zinklactat trihydrat), Acrylsäure, Maleinsäure, Bernsteinsäure, von Aminosäuren (Glyzin), von sauren Hydroxofunktionen (Zinkphenolate), Zink-para-Phenolsulfonat, Zink-para-Phenolsulfonat hydrat, Zinkacetylacetonat hydrat, Zinktannat, Zinkdimethyldithiocarbamat oder Zinktrifluormethansulfonat handelt.

8. Pressgranulierte Flammschutzmittelzusammensetzung nach einem oder mehreren der Ansprüche 1 bis 7, **dadurch gekennzeichnet, dass** sie weiterhin Carbodiimide, N,N'-Dicyclohexylcarbodiimid, Polyisocyanate, Carbonylbiscaprolactam, Styrol-Acryl-Polymere, sterisch gehinderten Phenole, sterisch gehinderten Amine und Lichtstabilisatoren, Phosphonite, Antioxidantien und/oder Trennmittel enthält.

9. Pressgranulierte Flammschutzmittelzusammensetzung nach einem oder mehreren der Ansprüche 1 bis 8, **dadurch gekennzeichnet, dass** ihre mittlere Teilchengröße 100 bis 2000 µm beträgt.

10. Pressgranulierte Flammschutzmittelzusammensetzung nach einem oder mehreren der Ansprüche 1 bis 9, **dadurch gekennzeichnet, dass** ihre mittlere Schüttdichte 200 bis 1500 g/l beträgt.

11. Pressgranulierte Flammschutzmittelzusammensetzung nach einem oder mehreren der Ansprüche 1 bis 10, **dadurch gekennzeichnet, dass** ihr Staubanteil (Anteil mit Teilchengrößen unter 20 µm) 0,1 bis 10 Gew.-% beträgt.

12. Pressgranulierte Flammschutzmittelzusammensetzung nach einem oder mehreren der Ansprüche 1 bis 11, **dadurch gekennzeichnet, dass** ihr Phosphorgehalt 8 bis 50 Gew.-% beträgt.

13. Pressgranulierte Flammschutzmittelzusammensetzung nach einem oder mehreren der Ansprüche 1 bis 12, **dadurch gekennzeichnet, dass** sie
a) 95 bis 60 Gew.-% (Di)Phosphinsäuresalz der Formel (I) und/oder (II) und/oder deren Polymere und
b) 5 bis 40 Gew.-% schmelzbares Zinkphosphinat enthält.

14. Pressgranulierte Flammschutzmittelzusammensetzung nach einem oder mehreren der Ansprüche 1 bis 12, **dadurch gekennzeichnet, dass** sie
a) 8 bis 90 Gew.-% (Di)Phosphinsäuresalz der Formel (I) und/oder (II) und/oder deren Polymere,
b) 2 bis 50 Gew.-% schmelzbares Zinkphosphinat und
c) 8 bis 90 Gew.-% mindestens eines Synergisten enthält.

15. Pressgranulierte Flammschutzmittelzusammensetzung nach einem oder mehreren der Ansprüche 1 bis 12, **dadurch gekennzeichnet, dass** sie
a) 10 bis 85 Gew.-% (Di)Phosphinsäuresalz der Formel (I) und/oder (II) und/oder deren Polymere,
b) 5 bis 40 Gew.-% schmelzbares Zinkphosphinat und
c) 10 bis 85 Gew.-% mindestens eines Synergisten enthält.

16. Verwendung der pressgranulierten Flammschutzmittelzusammensetzung nach mindestens einem der Ansprüche 1 bis 12 in einer flammgeschützten Polymerformmasse enthaltend
1 bis 50 Gew.-% pressgranulierte Flammschutzmittelzusammensetzung,
1 bis 99 Gew.-% Polymer oder Mischungen derselben.

17. Verwendung der pressgranulierten Flammschutzmittelzusammensetzung nach mindestens einem der Ansprüche 1 bis 12 in einer flammgeschützten Polymerformmasse enthaltend
1 bis 50 Gew.-% pressgranulierte Flammschutzmittelzusammensetzung,
1 bis 99 Gew.-% Polymer oder Mischungen derselben,
0,1 bis 60 Gew.-% Additive,
0,1 bis 60 Gew.-% Füllstoff bzw. Verstärkungsmaterialien.

18. Verwendung nach Anspruch 16 oder 17, **dadurch gekennzeichnet, dass** die Polymere aus der Gruppe der thermoplastischen Polymere wie Polyester, Polystyrol oder Polyamid und/oder der duroplastischen Polymere entstammen.

19. Verwendung der pressgranulierten Flammschutzmittelzusammensetzung nach mindestens einem der Ansprüche 1 bis 12 in flammgeschützten Polymer-Formkörpern, -Filmen, -Fäden und -Fasern enthaltend
1 bis 70 Gew.-% pressgranulierte Flammschutzmittelzusammensetzung,
1 bis 99 Gew.-% Polymer oder Mischungen derselben.

20. Verwendung der pressgranulierten Flammschutzmittelzusammensetzung nach mindestens einem der Ansprüche 1 bis 12 in flammgeschützten Polymer-Formkörpern, -Filmen, -Fäden und -Fasern enthaltend
1 bis 70 Gew.-% pressgranulierte Flammschutzmittelzusammensetzung,
1 bis 99 Gew.-% Polymer oder Mischungen derselben,
0,1 bis 60 Gew.-% Additive,
0,1 bis 60 Gew.-% Füllstoff bzw. Verstärkungsmaterialien.

21. Verwendung der flammgeschützten Polymerformmasse nach Anspruch 16 oder 17, in flammgeschützten Polymer-Formkörpern, -Filmen, -Fäden und -Fasern, enthaltend 50 bis 99 Gew.-% flammgeschützte Polymerformmasse.

## Claims

1. A compression-granulated flame retardant composition, which comprises a phosphinic salt of the formula (I) and/or comprises a diphosphinic salt of the formula (II), and/or comprises their polymers, 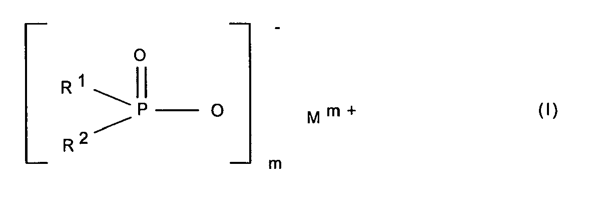 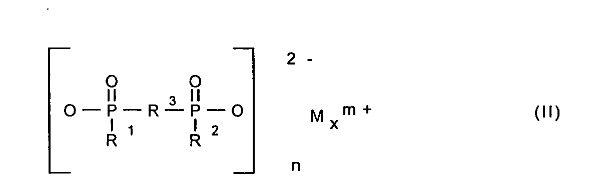 where
R¹ and R² are identical or different and are C₁-C₆-alkyl, linear or branched, and/or aryl; R³ is C₁-C₁₀-alkylene, linear or branched, C₆-C₁₀-aryiene, -alkylarylene, or -arylalkylene; M is Mg, Ca, Al, Sb, Sn, Ge, Ti, Fe, Zr, Ce, Bi, Sr, Mn, Li, Na, K, and/or a protonated nitrogen base; m is from 1 to 4; n is from 1 to 4; x is from 1 to 4, and comprises a fusible zinc phosphinate, where the fusible zinc phosphinates of the formula (I) and/or their polymers correspond to 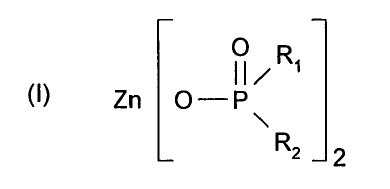 where
R¹ and R² are identical or different and are hydrogen, C₁-C₁₈-alkyl, linear or branched, and/or aryl, and have a melting point of from 40 to 250°C, and the fusible zinc phosphinate has a phosphorus content of 10-35% by weight, and the compression-granulated flame retardant composition comprises
a) from 50 to 98% by weight of (di)phosphinic salt of the formula (I) and/or (II) and/or their polymers, and
b) from 2 to 50% by weight of fusible zinc phosphinate.

2. The compression-granulated flame retardant composition as claimed in claim 1, wherein the zinc phosphinate is zinc dimethylphosphinate, zinc methylethylphosphinate, zinc diphenylphosphinate, and/or zinc diethylphosphinate.

3. The compression-granulated flame retardant composition as claimed in claim 1 or 2, wherein the fusible zinc phosphinate has a phosphorus content of from 15 to 25% by weight.

4. The compression-granulated flame retardant composition as claimed in one or more of claims 1 to 3, which also comprises at least one synergist.

5. The compression-granulated flame retardant composition as claimed in one or more of claims 1 to 4, wherein the synergist is melamine phosphate, dimelamine phosphate, melamine pyrophosphate, melamine polyphosphates, melam polyphosphates, melem polyphosphates, and/or melon polyphosphates; melamine condensates, such as melam, melem, and/or melon; oligomeric esters of tris(hydroxyethyl) isocyanurate with aromatic polycarboxylic acids, benzoguanamine, tris(hydroxyethyl) isocyanurate, allantoin, glycoluril, melamine, melamine cyanurate, dicyandiamide, and/or guanidine; nitrogen-containing phosphates of the formulae (NH₄)_{y} H_{3-y} PO₄ or (NH₄ PO₃)_{z}, where y is from 1 to 3 and z is from 1 to 10 000.

6. The compression-granulated flame retardant composition as claimed in one or more of claims 1 to 4, wherein the synergist is nitrogen compounds of the formulae (III) to (VIII), or a mixture thereof 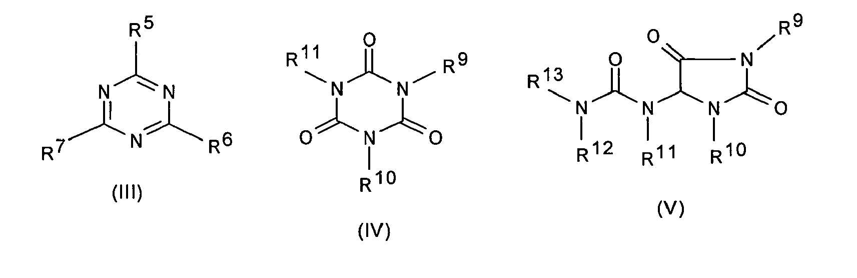 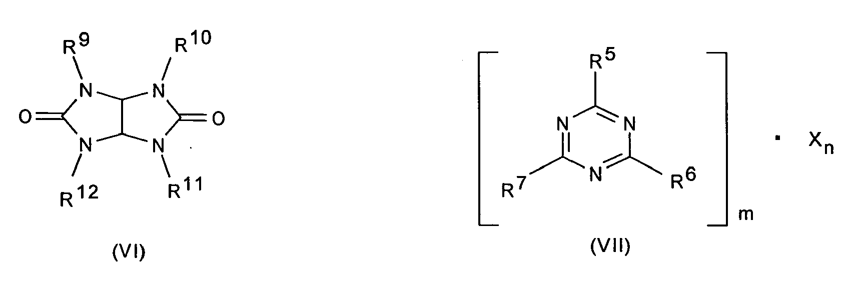 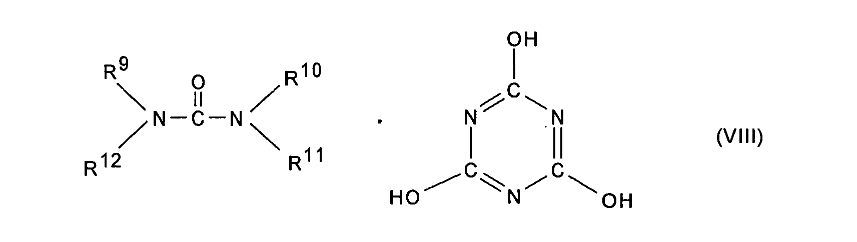 where
R⁵ to R⁷ are hydrogen, C₁-C₈-alkyl, or C₅-C₁₆-cycloalkyl or -alkylcycloalkyl, unsubstituted or substituted with a hydroxy function or with a C₁-C₄- hydroxyalkyl function, or are C₂-C₈-alkenyl, C₁-C₈-alkoxy, -acyl, -acyloxy, C₆-C₁₂-aryl or -arylalkyl, -OR⁸ and -N(R⁸)R⁹, including systems of alicyclic-N or aromatic-N type,
R⁸ is hydrogen, C₁-C₈-alkyl, C₅-C₁₆-cydoalkyl or -alkylcycloalkyl, unsubstituted or substituted with a hydroxy function or with a C₁-C₄-hydroxyalkyl function, or is C₂-C₈-alkenyl, C₁-C₈-alkoxy, -acyl, -acyloxy, or C₆-C₁₂-aryl or -arylalkyl,
R⁹ to R¹³ are the groups of R⁸, or else -O-R⁸,
m and n, independently of one another, are 1, 2, 3 or 4, and X is acids which can form adducts with triazine compounds (III).

7. The compression-granulated flame retardant composition as claimed in one or more of claims 1 to 4, wherein the synergists are zinc oxide, zinc hydroxide, zinc oxide hydrate, anhydrous zinc carbonate, basic zinc carbonate, zinc hydroxide carbonate, basic zinc carbonate hydrate, (basic) zinc silicate, zinc hexafluorosilicate, zinc stannate, zinc magnesium aluminum hydroxide carbonate, zinc hexafluorosilicate hexahydrate, zinc salts of the oxo acids of the third main group, e.g. zinc borate, zinc salts of the oxo acids of the fifth main group, e.g. zinc phosphate, zinc pyrophosphate, zinc salts of the oxo acids of the transition metals, e.g. zinc chromate(VI) hydroxide (zinc yellow), zinc chromite, zinc molybdate, zinc permanganate, zinc molybdate magnesium silicate, or zinc permanganate; and/or those having organic anions, e.g. zinc salts of mono-, di-, oligo-, or polycarboxylic acids (salts of formic acid (zinc formates), of acetic acid (zinc acetates, zinc acetate dihydrate, Galzin), of trifluoroacetic acid (zinc trifluoroacetate hydrate), zinc propionate, zinc butyrate, zinc valerate, zinc caprylate, zinc oleate, zinc stearate, of oxalic acid (zinc oxalate), of tartaric acid (zinc tartrate), citric acid (tribasic zinc citrate dihydrate), benzoic acid (benzoate), zinc salicylate, lactic acid (zinc lactate, zinc lactate trihydrate), acrylic acid, maleic acid, succinic acid, of amino acids (glyzine), of acidic hydroxy functions (zinc phenolates), zinc para-phenolsulfonate, zinc para-phenolsulfonate hydrate, zinc acetylacetonate hydrate, zinc tannate, zinc dimethyldithiocarbamate, or zinc trifluoromethanesulfonate).

8. The compression-granulated flame retardant composition as claimed in one or more of claims 1 to 7, which also comprises carbodiimides, N,N'-dicyclohexylcarbodiimide, polyisocyanates, carbonylbiscaprolactam, styrene-acrylic polymers, sterically hindered phenols, sterically hindered amines and light stabilizers, phosphonites, antioxidants, and/or release agents.

9. The compression-granulated flame retardant composition as claimed in one or more of claims 1 to 8, whose average particle size is from 100 to 2000 µm.

10. The compression-granulated flame retardant composition as claimed in one or more of claims 1 to 9, whose average bulk density is from 200 to 1500 g/l.

11. The compression-granulated flame retardant composition as claimed in one or more of claims 1 to 10, whose dust content (fraction with particle sizes below 20 µm) is from 0.1 to 10% by weight.

12. The compression-granulated flame retardant composition as claimed in one or more of claims 1 to 11, whose phosphorus content is from 8 to 50% by weight.

13. The compression-granulated flame retardant composition as claimed in one or more of claims 1 to 12, which comprises
a) from 95 to 60% by weight of phosphinic salts of the formula (I) and/or a diphosphinic salt of the formula (II) and/or their polymers, and
b) from 5 to 40% by weight of fusible zinc phosphinate.

14. The compression-granulated flame retardant composition as claimed in one or more of claims 1 to 12, which comprises
a) from 8 to 90% by weight of phosphinic salts of the formula (I) and/or a diphosphinic salt of the formula (II) and/or their polymers, and
b) from 2 to 50% by weight of fusible zinc phosphinate, and
c) from 8 to 90% by weight of at least one synergist.

15. The compression-granulated flame retardant composition as claimed in one or more of claims 1 to 12, which comprises
a) from 10 to 85% by weight of phosphinic salts of the formula (I) and/or a diphosphinic salt of the formula (II) and/or their polymers, and
b) from 5 to 40% by weight of fusible zinc phosphinate, and
c) from 10 to 85% by weight of at least one synergist.

16. The use of the compression-granulated flame retardant composition as claimed in at least one of claims 1 to 12 in a flame-retardant polymer molding composition comprising
from 1 to 50% by weight of compression-granulated flame retardant composition, from 1 to 99% by weight of polymer or a mixture of these.

17. The use of the compression-granulated flame retardant composition as claimed in at least one of claims 1 to 12 in a flame-retardant polymer molding composition comprising
from 1 to 50% by weight of compression-granulated flame retardant composition,
from 1 to 99% by weight of polymer or a mixture of these,
from 0.1 to 60% by weight of additives,
from 0.1 to 60% by weight of filler or of reinforcing materials.

18. The use as claimed in claim 16 or 17, wherein the polymers derive from the group of the thermoplastic polymers, such as polyesters, polystyrene, or polyamide, and/or of the thermoset polymers.

19. The use of the compression-granulated flame retardant composition as claimed in at least one of claims 1 to 12 in flame-retardant polymer moldings, in flame-retardant polymer films, in flame-retardant polymer filaments, and in flame-retardant polymer fibers, comprising
from 1 to 70% by weight compression-granulated flame retardant composition,
from 1 to 99% by weight of polymer or a mixture of these.

20. The use of the compression-granulated flame retardant composition as claimed in at least one of claims 1 to 12 in flame-retardant polymer moldings, in flame-retardant polymer films, in flame-retardant polymer filaments, and in flame-retardant polymer fibers, comprising
from 1 to 70% by weight of compression-granulated flame retardant composition, from 1 to 99% by weight of polymer or a mixture of these,
from 0.1 to 60% by weight of additives,
from 0.1 to 60% by weight of filler or of reinforcing materials.

21. The use of the flame-retardant polymer molding composition as claimed in claim 16 or 17, in flame-retardant polymer moldings, in flame-retardant polymer films, in flame-retardant polymer filaments, and in flame-retardant polymer fibers,
comprising
from 50 to 99% by weight of flame-retardant polymer molding composition.

## Revendications

1. Composition d'agent ignifuge granulée par compression, **caractérisée en ce qu'**elle contient un sel d'acide phosphinique de formule (I), et/ou un sel d'acide diphosphinique de formule (II) et/ou leurs polymères 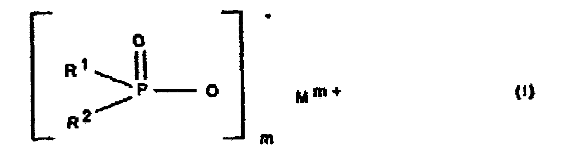 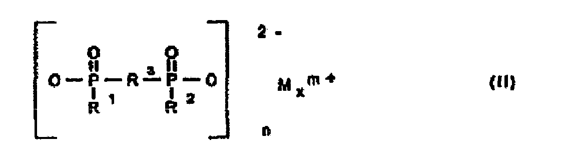 où
R¹, R² sont identiques ou différents et signifient C₁- C₆-alkyle, linéaire ou ramifié et/ou aryle ;
R³ signifie C₁-C₁₀-alkylène, linéaire ou ramifié, C₆- C₁₀-arylène, C₆-C₁₀-alkylarylène ou C₆-C₁₀- arylalkylène ;
M signifie Mg, Ca, Al, Sb, Sn, Ge, Ti, Fe, Zr, Ce, Bi, Sr, Mn, Li, Na, K et/ou une base azotée sous forme protonée ;
m. vaut 1 à 4 ;
n vaut 1 à 4 ;
x vaut 1 à 4
et un phosphinate de zinc fusible, où les phosphinates de zinc fusibles de formule (I) et/ou leurs polymères correspondent à 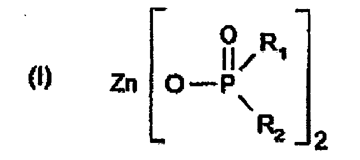 où
R¹, R² sont identiques ou différents et signifient hydrogène, C₁-C₁₈-alkyle, linéaire ou ramifié et/ou aryle, et présentent un point de fusion entre 40 et 250°C, et le phosphinate de zinc fusible présente une teneur en phosphore de 10-35% en poids
et la composition d'agent ignifuge granulée par compression contient
a) 50 à 98% en poids de sel d'acide (di)phosphinique de formule (I) et/ou (II) et/ou ses polymères et
b) 2 à 50% en poids de phosphinate de zinc fusible.

2. Composition d'agent ignifuge granulée par compression selon la revendication 1, **caractérisée en ce qu'**il s'agit pour le phosphinate de zinc de sel de zinc de l'acide diméthylphosphinique, de sel de zinc de l'acide méthyléthylphosphinique, de sel de zinc de l'acide diphénylphosphinique et/ou de sel de zinc de l'acide diéthylphosphinique.

3. Composition d'agent ignifuge granulée par compression selon la revendication 1 ou 2, **caractérisée en ce que** le phosphinate de zinc fusible présente une teneur en phosphore de 15 à 25% en poids.

4. Composition d'agent ignifuge granulée par compression selon l'une ou plusieurs des revendications 1 à 3, **caractérisée en ce qu'**elle contient en outre au moins un synergiste.

5. Composition d'agent ignifuge granulée par compression selon l'une ou plusieurs des revendications 1 à 4, **caractérisée en ce qu'**il s'agit pour les synergistes de phosphate de mélamine, de phosphate de dimélamine, de pyrophosphate de mélamine, de polyphosphates de mélamine, de polyphosphates de mélam, de polyphosphates de mélem et/ou de polyphosphates de mélon ; de produits de condensation de la mélamine tels que le mélam, le mélem et/ou le mélon ; d'esters oligomères du tris(hydroxyéthyl)isocyanurate avec des acides polycarboxyliques aromatiques, de benzoguanamine, de tris(hydroxyéthyl)isocyanurate, d'allantoïne, de glyco-urile, de mélamine, de mélamine-cyanurate, de dicyanodiamide et/ou de guanidine ; de phosphates azotés des formules (NH₄)_{y}H_{3-y}PO₄ ou (NH₄PO₃)_{z}, avec y valant 1 à 3 et z valant 1 à 10 000.

6. Composition d'agent ignifuge granulée par compression selon l'une ou plusieurs des revendications 1 à 4, **caractérisée en ce qu'**il s'agit pour les synergistes de composés azotés des formules (III) à (VIII) ou de leurs mélanges, 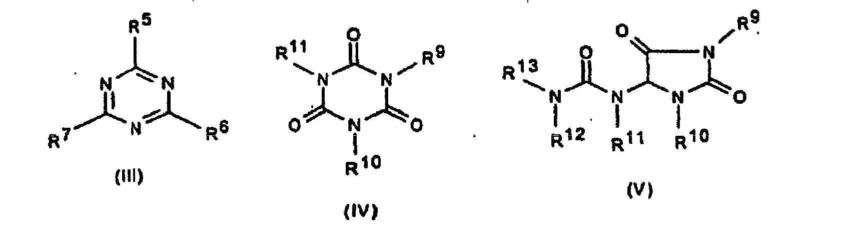 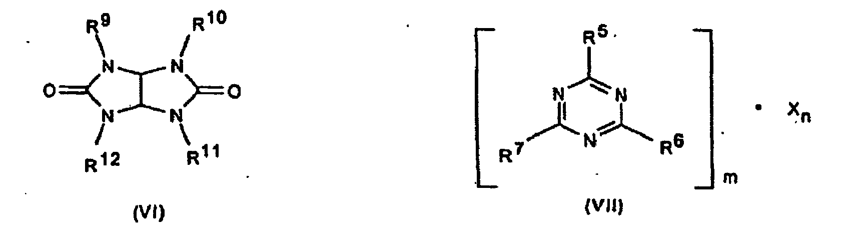 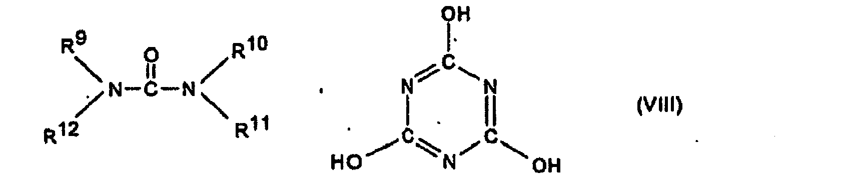 où
R⁵ à R⁷ signifient hydrogène, C₁-C₈-alkyle, C₅-C₁₆- cycloalkyle ou C₅-C₁₆-alkylcycloalkyle, le cas échéant substitués par une fonction hydroxy ou une fonction C₁-C₄-hydroxyalkyle, C₂-C₈-alcényle, C₁-C₈- alcoxy, C₁-C₈-acyle, C₁-C₈-acyloxy, C₆-C₁₂-aryle ou C₆-C₁₂-arylalkyle, -OR⁸ et -N(R⁸)R⁹, ainsi que les radicaux N-alicycliques ou N-aromatiques,
R⁸ signifie hydrogène, C₁-C₈-alkyle, C₅-C₁₆-cycloalkyle ou C₅-C₁₆-alkylcycloalkyle, le cas échéant substitués par une fonction hydroxy ou une fonction C₁-C₄-hydroxyalkyle, C₂-C₈-alcényle, C₁-C₈- alcoxy, C₁-C₈-acyle, C₁-C₈-acyloxy ou C₆-C₁₂-aryle ou C₆-C₁₂-arylalkyle,
R⁹ à R¹³ sont les mêmes groupes que R⁸ ainsi que -O-R⁸,
m et n signifient, indépendamment l'un de l'autre, 1, 2, 3 ou 4,
X signifie des acides, qui peuvent former des produits d'addition avec des composés triaziniques (III).

7. Composition d'agent ignifuge granulée par compression selon l'une ou plusieurs des revendications 1 à 4, **caractérisée en ce qu'**il s'agit, pour les synergistes, d'oxyde de zinc, d'hydroxyde de zinc, d'oxyde de zinc hydraté, de carbonate de zinc anhydre, de carbonate de zinc basique, d'hydroxyde-carbonate de zinc, de carbonate de zinc basique hydraté, de silicate de zinc (basique), d'hexafluorosilicate de zinc, de stannate de zinc, d'hydroxyde-carbonate de zinc-magnésium-aluminium, d'hexafluorosilicate de zinc hexahydraté, de sels de zinc des oxoacides du troisième groupe principal tels que le borate de zinc, de sels de zinc des oxoacides du cinquième groupe principal tels que le phosphate de zinc, le pyrophosphate de zinc, les sels de zinc des oxoacides des métaux de transition, tels que l'hydroxyde de chromate (VI) de zinc (jaune de zinc), le chromite de zinc, le molybdate de zinc, le permanganate de zinc, le molybdate de zinc-silicate de magnésium ou le permanganate de zinc ; et/ou de ceux avec des anions organiques tels que les sels de zinc d'acides monocarboxyliques, dicarboxyliques, oligocarboxyliques, polycarboxyliques (sels de l'acide formique (formiates de zinc), de l'acide acétique (acétate de zinc, acétate de zinc dihydraté, Galzine), de l'acide trifluoroacétique (trifluoroacétate de zinc hydraté), propionate de zinc, butyrate de zinc, valérate de zinc, caprylate de zinc, oléate de zinc, stéarate de zinc, sels de l'acide oxalique (oxalate de zinc), de l'acide tartrique (tartrate de zinc), de l'acide citrique (citrate de zinc tribasique dihydraté), de l'acide benzoïque (benzoate de zinc), salicylate de zinc, sels de l'acide lactique (lactate de zinc, lactate de zinc trihydraté), sels de l'acide acrylique, maléique, succinique, d'aminoacides (glycine), de fonctions hydroxo acides (phénolates de zinc), le para-phénolsulfonate de zinc, para-phénolsulfonate de zinc hydraté, acétylacétonate de zinc hydraté, tannate de zinc, diméthyldithiocarbamate de zinc ou trifluorométhanesulfonate de zinc).

8. Composition d'agent ignifuge granulée par compression selon l'une ou plusieurs des revendications 1 à 7, **caractérisée en ce qu'**elle contient en outre des carbodiimides, du N,N'-dicyclohexylcarbodiimide, des polyisocyanates, du carbonylbiscaprolactame, les polymères de styrène-acryle, des phénols stériquement encombrés, des amines stériquement encombrées et des stabilisateurs à la lumière, des phosphonites, des antioxydants, et/ou des agents de démoulage.

9. Composition d'agent ignifuge granulée par compression selon l'une ou plusieurs des revendications 1 à 8, **caractérisée en ce que** sa grosseur moyenne de particules est de 100 à 2000 µm.

10. Composition d'agent ignifuge granulée par compression selon l'une ou plusieurs des revendications 1 à 9, **caractérisée en ce que** sa densité apparente moyenne est de 200 à 1500 g/l.

11. Composition d'agent ignifuge granulée par compression selon l'une ou plusieurs des revendications 1 à 10, **caractérisée en ce que** sa proportion de poussière (proportion avec des grosseurs de particules inférieure à 20 µm) est de 0,1 à 10% en poids.

12. Composition d'agent ignifuge granulée par compression selon l'une ou plusieurs des revendications 1 à 11, **caractérisée en ce que** sa teneur en phosphore est de 8 à 50% en poids.

13. Composition d'agent ignifuge granulée par compression selon l'une ou plusieurs des revendications 1 à 12, **caractérisée en ce qu'**elle contient
a) 95 à 60% en poids de sel d'acide (di)phosphinique de formule (I) et/ou (II) et/ou ses polymères et
b) 5 à 40% en poids d'un phosphinate de zinc fusible.

14. Composition d'agent ignifuge granulée par compression selon l'une ou plusieurs des revendications 1 à 12, **caractérisée en ce qu'**elle contient
a) 8 à 90% en poids de sel d'acide (di)phosphinique de formule (I) et/ou (II) et/ou ses polymères,
b) 2 à 50% en poids d'un phosphinate de zinc fusible et
c) 8 à 90% en poids d'au moins un synergiste.

15. Composition d'agent ignifuge granulée par compression selon l'une ou plusieurs des revendications 1 à 12, **caractérisée en ce qu'**elle contient
a) 10 à 85% en poids de sel d'acide (di)phosphinique de formule (I) et/ou (II) et/ou ses polymères,
b) 5 à 40% en poids d'un phosphinate de zinc fusible et
c) 10 à 85% en poids d'au moins un synergiste.

16. Utilisation de la composition d'agent ignifuge granulée par compression selon au moins l'une quelconque des revendications 1 à 12 dans une masse de moulage polymère ignifugée contenant
- 1 à 50% en poids de composition d'agent ignifuge granulée par compression,
- 1 à 99% en poids de polymères ou de mélanges de ceux-ci.

17. Utilisation de la composition d'agent ignifuge granulée par compression selon au moins l'une quelconque des revendications 1 à 12 dans une masse de moulage polymère ignifugée contenant
- 1 à 50% en poids de composition d'agent ignifuge granulée par compression,
- 1 à 99% en poids de polymère ou de mélanges de ceux-ci,
- 0,1 à 60% en poids d'additifs,
- 0,1 à 60% en poids de charges ou de matériaux de renforcement.

18. Utilisation selon la revendication 16 ou 17, **caractérisée en ce que** les polymères proviennent du groupe des polymères thermoplastiques, tels que le polyester, le polystyrène ou le polyamide et/ou des polymères thermodurcissables.

19. Utilisation de la composition d'agent ignifuge granulée par compression selon au moins l'une quelconque des revendications 1 à 12 dans des corps façonnés, des films, des fils et des fibres en polymère contenant
- 1 à 70% en poids de composition d'agent ignifuge granulée par compression,
- 1 à 99% en poids de polymères ou de mélanges de ceux-ci.

20. Utilisation de la composition d'agent ignifuge granulée par compression selon au moins l'une quelconque des revendications 1 à 12 dans des corps façonnés, des films, des fils et des fibres en polymère contenant
- 1 à 70% en poids de composition d'agent ignifuge granulée par compression,
- 1 à 99% en poids de polymère ou de mélanges de ceux-ci,
- 0,1 à 60% en poids d'additifs,
- 0,1 à 60% en poids de charges ou de matériaux de renforcement.

21. Utilisation de la masse de moulage polymère ignifugée selon la revendication 16 ou 17 dans des corps façonnés, des films, des fils et des fibres en polymère ignifugés contenant 50 à 99% en poids de masse de moulage polymère ignifugée.
